(19) Europäisches Patentamt
European Patent Office
Office européen des brevets

(11) **EP 4 494 996 A1**

(12) **EUROPEAN PATENT APPLICATION**
published in accordance with Art. 153(4) EPC

(43) Date of publication:
**22.01.2025 Bulletin 2025/04**

(21) Application number: **22931999.1**

(22) Date of filing: **15.03.2022**

(51) International Patent Classification (IPC):
**B63B 79/10** *(2020.01)*

(52) Cooperative Patent Classification (CPC):
**B63B 79/10**

(86) International application number:
**PCT/JP2022/011588**

(87) International publication number:
**WO 2023/175714 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Pioneer Corporation**
**Tokyo 113-0021 (JP)**
• **Pioneer Smart Sensing Innovations Corporation**
**Tokyo 113-0021 (JP)**

(72) Inventors:
• **KATO, Masahiro**
**Kawagoe-shi, Saitama 350-8555 (JP)**
• **MATSUZAKI, Shin**
**Kawagoe-shi, Saitama 350-8555 (JP)**
• **KATO, Masahiro**
**Kawagoe-shi, Saitama 350-8555 (JP)**

(74) Representative: **Viering, Jentschura & Partner
mbB**
**Patent- und Rechtsanwälte**
**Am Brauhaus 8**
**01099 Dresden (DE)**

(54) **INFORMATION PROCESSING DEVICE, CONTROL METHOD, PROGRAM, AND STORAGE MEDIUM**

(57)     The information processing device comprises an acquisition means, a marker position acquisition means and a search range setting means. The acquisition means acquires measurement data generated by a measuring device provided on a ship. The marker position acquisition means acquires a position of at least one marker provided to a berthing place, based on the measurement data. The search range setting means sets a search range of a point cloud of an edge portion of the berthing place, based on the position of the at least one marker.

FIG. 3

EP 4 494 996 A1

**Description**

TECHNICAL FIELD

The present disclosure relates to processing when a ship is berthed.

BACKGROUND ART

Conventionally, there is known a technology which supports berthing of a ship. For example, Patent Document 1 discloses a technique for controlling to change the attitude of the ship so that the light irradiated from the lidar and then reflected by the object around the berthing position can be received by the lidar, in the automatic berthing device for performing automatic berthing of a ship.

RELATED ART DOCUMENT

PATENT DOCUMENT

Patent Document 1: Japanese Patent Application Laid-Open under No. 2020-59403

SUMMARY OF THE INVENTION

PROBLEM TO BE SOLVED BY THE INVENTION

For ships, it is important to berth safely and smoothly to a berthing place, and it is particularly desired to realize a berthing support system for ship steering support and automatic operation. Therefore, in a berthing support system, it is necessary to calculate parameters such as distance, speed and angle with respect to a berthing place with high accuracy.
The present disclosure has been made in order to solve the problems as described above, and its main object is to provide an information processing device capable of calculating parameters used in berthing support with high accuracy.

MEANS FOR SOLVING THE PROBLEM

An invention described in claim is an information processing device comprising: an acquisition means configured to acquire measurement data generated by a measuring device provided on a ship; a marker position acquisition means configured to acquire a position of at least one marker among markers provided to a berthing place, based on the measurement data; and a search range setting means configured to set a search range of a point cloud of an edge portion of the berthing place, based on the position of the at least one marker.
An invention described in claim is a control method executed by a computer, comprising: acquiring measurement data generated by a measuring device provided on a ship; acquiring a position of at least one marker among markers provided to a berthing place, based on the measurement data; and setting a search range of a point cloud of an edge portion of the berthing place, based on the position of the at least one marker.
An invention described in claim is a program causing a computer to execute processing of: acquiring measurement data generated by a measuring device provided on a ship; acquiring a position of at least one marker among markers provided to a berthing place, based on the measurement data; and setting a search range of a point cloud of an edge portion of the berthing place, based on the position of the at least one marker.

BRIEF DESCRIPTION OF THE DRAWINGS

[FIG. 1A] FIG. 1A is a block diagram of an operation support system.
[FIG. 1B] FIG. 1B is a top view showing a ship and field of view ranges of lidars included in the operation support system.
[FIG. 1C] FIG. 1C is a view showing a ship and field of view ranges of lidars from the rear.
[FIG. 2] FIG. 2 is a block diagram showing an example of a hardware configuration of an information processing device.
[FIG. 3] FIG. 3 is a functional block diagram related to berthing support processing.
[FIG. 4A] FIG. 4A shows a view in which the lidar is capturing a quay to be berthed.
[FIG. 4B] FIG. 4B is a perspective view of the quay showing measured points and a nearest neighbor point for each vertical line on the quay, which is the berthing place measured by the lidar.

[FIG. 5A] FIG. 5A shows an example of a data structure of reliability information.

[FIG. 5B] FIG. 5B is a diagram showing an example of the indexes and reliability included in the reliability information.

[FIG. 5C] FIG. 5C is a bird's-eye view showing a target ship and the berthing place, with the indexes shown in FIG. 5B.

[FIG. 6A] FIG. 6A is a diagram showing an example of a ship coordinate system based on a hull of the target ship.

[FIG. 6B] FIG. 6B is a perspective view of a structure showing normal vectors.

[FIG. 7] FIG. 7A is a diagram illustrating an example of a berthing place where a front marker and a rear marker are provided.

[FIG. 8] FIG. 8 is a top view showing an extraction window EWA.

[FIG. 9A] FIG. 9A is a diagram showing nearest neighbor point for each vertical line in the berthing place SBP.

[FIG. 9B] FIG. 9B is a diagram showing the nearest neighbor points acquired as a berthing place edge point cloud by the extraction window EWA.

[FIG. 10A] FIG. 10A is a diagram showing a height $h_{mf}$ and a height $h_{mr}$.

[FIG. 10B] FIG. 10B is a top view showing a marker interval $r_m$.

[FIG. 10C] FIG. 10C is a top view showing a distance $w_{mf}$ and a distance $w_{mr}$.

[FIG. 11] FIG. 11 is a diagram showing an example of the nearest neighbor points acquired when a marker CM is determined to be a front marker.

[FIG. 12] FIG. 12 is a diagram showing an example of a straight line generated when the marker CM is assumed to be a front marker.

[FIG. 13] FIG. 13 is a diagram showing an example of a straight line generated when the marker CM is assumed to be a rear marker.

[FIG. 14A] FIG. 14A is a flowchart showing an outline of berthing support processing.

[FIG. 14B] FIG. 14B is a flowchart illustrating an example of a process of acquiring a berthing place edge point cloud.

[FIG. 15A] FIG. 15A is a diagram showing an example when an incorrect edge straight line is generated.

[FIG. 15B] FIG. 15B is a diagram showing an example when a correct edge straight line is generated.

[FIG. 15C] FIG. 15C is a diagram showing an example when a correct edge straight line is generated.

[FIG. 16] FIG. 16 shows an example of a process of acquiring a berthing place edge point cloud.

[FIG. 17A] FIG. 17A is a top view showing an origin O, a distance $d_f$, a distance $d_r$, a front end FE, and a rear end RE.

[FIG. 17B] FIG. 17B is a diagram of a unit vector u used to calculate the distance $d_f$ and the distance $d_r$.

[FIG. 18] FIG. 18 is a diagram showing an example of a process for calculating the distance $d_f$ and the distance $d_r$.

MODES FOR EXERCISING THE INVENTION

According to one aspect of the present invention, there is provided an information processing device comprising: an acquisition means configured to acquire measurement data generated by a measuring device provided on a ship; a marker position acquisition means configured to acquire a position of at least one marker among markers provided to a berthing place, based on the measurement data; and a search range setting means configured to set a search range of a point cloud of an edge portion of the berthing place, based on the position of the at least one marker.

The information processing device comprises an acquisition means, a marker position acquisition means and a search range setting means. The acquisition means acquires measurement data generated by a measuring device provided on a ship. The marker position acquisition means acquires a position of at least one marker among markers provided to a berthing place, based on the measurement data. The search range setting means sets a search range of a point cloud of an edge portion of the berthing place, based on the position of the at least one marker. Thus, the parameters used in the berthing support can be calculated with high accuracy.

According to one mode of the above information processing device, the marker position acquisition means acquires a position of a first marker provided on a front side of the ship, and a position of a second marker provided on a rear side of the ship, and the search range setting means sets a substantially rectangular area or a substantially rectangular parallelepiped area corresponding to the position of the first marker and the position of the second marker as the search range.

According to another mode of the above information processing device, the search range setting means sets the search range by using a distance from a straight line along the edge portion of the berthing place to the first marker and a distance from the straight line to the second marker.

According to still another mode of the above information processing device, the marker position acquisition means acquires a position of one marker provided on a front side or a rear side of the ship, and the search range setting means sets the search range based on an interval of two markers provided to the berthing place and the position of the one marker.

According to still another mode of the above information processing device, the search range setting means sets the search range by using a distance from a straight line along the edge portion of the berthing place to the one marker.

According to still another mode of the above information processing device, the search range setting means sets the search range by using a total length of the ship.

According to still another mode of the above information processing device, the marker position acquisition means acquires a position of a first marker provided on a front side of the ship and a position of a second marker provided on a rear side of the ship. The information processing device further comprises a distance calculation means configured to calculate a distance from a reference position of the ship to ends of a berthing area where the ship should be positioned when the ship is going to berth at the berthing place, based on the position of the first marker, the position of the second marker, and a straight line along the edge portion of the berthing place.

According to still another mode of the information processing device, two markers are provided to the berthing place at positions of difference heights from an upper surface of the berthing place.

According to another aspect of the present invention, there is provided a control method executed by a computer, comprising: acquiring measurement data generated by a measuring device provided on a ship; acquiring a position of at least one marker among markers provided to a berthing place, based on the measurement data; and setting a search range of a point cloud of an edge portion of the berthing place, based on the position of the at least one marker. Thus, the parameters used in the berthing support can be calculated with high accuracy.

According to still another aspect of the present invention, there is provided a program causing a computer to execute processing of: acquiring measurement data generated by a measuring device provided on a ship; acquiring a position of at least one marker among markers provided to a berthing place, based on the measurement data; and setting a search range of a point cloud of an edge portion of the berthing place, based on the position of the at least one marker. By executing the program on a computer, the above-described information processing device can be realized. The program can be stored on a storage medium for use.

EMBODIMENT

Preferred embodiments of the present invention will be described below with reference to the attached drawings.

<First Embodiment>

First, a first embodiment will be described below.

[Outline of operation support system]

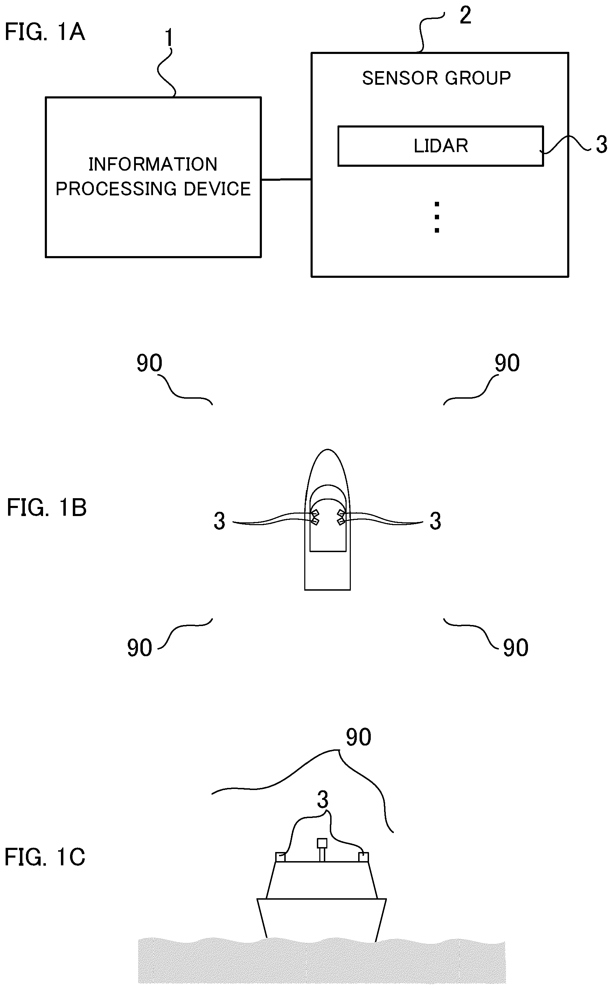

FIGS. 1A to 1C show a schematic configuration of an operation support system according to the present embodiment. Specifically, FIG. 1A shows a block configuration diagram of the operation support system, FIG. 1B is a top view illustrating a ship and field of view ranges (also referred to as a "measurement range" or "distance measurable range") 90 of the lidars 3 included in the operation support system described later, and FIG. 1C is a view illustrating the ship and the field of view ranges 90 of the lidars 3 from the rear. The operation support system includes an information processing device 1 which moves together with a ship that is a mobile body, and a sensor group 2 mounted on the ship. Hereafter, the ship equipped with the operation support system is also called a "target ship".

The information processing device 1 is electrically connected to the sensor group 2, and supports the operation of the target ship based on the outputs of various sensors included in the sensor group 2. The operation support includes berthing support such as automatic berthing. Here, "berthing" includes not only the case of docking the target ship to the quay but also the case of docking the target ship to a structural body such as a pier. In the following, the term "berthing place" shall mean a generic term for structures such as a quay, a pier, or the like that are subject to berthing. The information processing device 1 may be a navigation device provided on a ship or an electronic control device built in a ship.

The sensor group 2 includes various external and internal sensors provided on the ship. In the present embodiment, the sensor group 2 includes, for example, a lidar (Lidar: Light Detection and Ranging, or Laser Illuminated Detection And Ranging) 3.

The lidar 3 is an external sensor, which discretely measures the distance to the object existing in the outside by emitting a pulse laser for a predetermined angle range in the horizontal direction (see FIG. 1B) and a predetermined angle range in the vertical direction (see FIG. 1C), and generates a three-dimensional point cloud data indicating the position of the object.

The lidar 3 has an irradiation unit for irradiating a laser beam while changing the irradiation direction, a light receiving unit for receiving the reflected light of the irradiated laser beam (scattered light), and an output unit for outputting a scan data based on the light receiving signal output by the light receiving unit. The data measured for each irradiation direction of the laser beam (scanning position) is generated based on the irradiation direction corresponding to the laser beam received by the light receiving unit and the response delay time of the laser beam identified based on the received light signal described above. Hereafter, the point measured by irradiating the laser beam within the measurement range of the lidar 3 or the measurement data thereof is referred to as a "measured point".

In the example of FIGS. 1B and 1C, as the lidars 3, a lidar directed toward the port front of the target ship, a lidar directed toward the port rear of the target ship, a lidar directed toward the starboard front of the target ship, and a lidar directed toward the starboard rear of the target ship are respectively provided on the ship. When the target ship approaches the berthing place, the point cloud data obtained by measuring the berthing place are generated by the front lidar 3 and the rear lidar 3 provided on the side of the target ship alongside the berthing place. Hereafter, the lidar 3 on the front side for measuring the berthing place is called a "front lidar", and the lidar 3 on the rear side for measuring the berthing place is called a "rear lidar". The front lidar and the rear lidar are examples of a first measurement device and a second measurement device. The arrangement of the lidars 3 is not limited to the example shown in FIGS. 1B and 1C.

Here, the point cloud data can be regarded as an image (frame) representing each measurement direction by a pixel and representing the measurement distance and the reflection intensity value in each measurement direction by pixel values. In this case, the emission direction of the laser beam (i.e. the measurement direction) in the elevation angle is different in the vertical direction of the pixels, and the emission direction of the laser beam in the horizontal angle is different in the horizontal direction of the pixels. Hereafter, the measured points corresponding to the alignment of pixels (i.e., vertical alignment) for which the position of the index in the horizontal direction coincide when the point cloud data is regarded as an image is referred to as a "vertical line". In addition, the index in the horizontal direction when the point cloud data is regarded as an image is called a "horizontal number", and the index in the vertical direction is called a "vertical number".

The lidar 3 is not limited to the above-described scan type lidar. The lidar 3 may be a flash type lidar for generating three-dimensional data by diffusing and irradiating a laser beam to the field of view of the two-dimensional array-shaped sensor. The lidar 3 is an example of a "measurement device" in the present invention.

[Configuration of the information processing device]

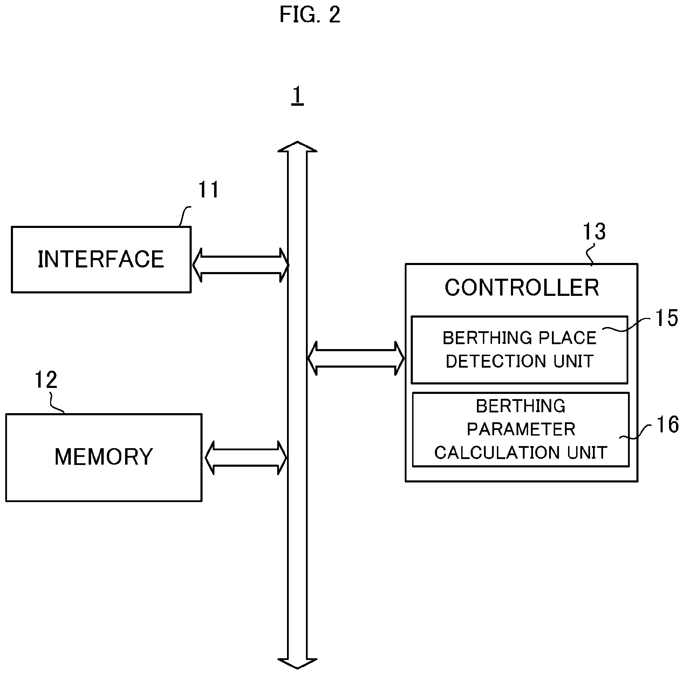

FIG. 2 is a block diagram illustrating an example of a hardware configuration of an information processing device 1. The information processing device 1 mainly includes an interface 11, a memory 12, and a controller 13. Each of these elements is connected to each other through a bus line.

The interface 11 performs the interface operation related to the transfer of data between the information processing device 1 and the external devices. In the present embodiment, the interface 11 acquires output data from the sensors of the sensor group 2 and supplies them to the controller 13. Further, for example, the interface 11 supplies signals for the control of the target ship generated by the controller 13 to each component of the target ship to control the operation of the target ship. For example, the target ship includes a driving source such as an engine or an electric motor, a screw for generating a propulsive force in the traveling direction based on the driving force of the driving source, a thruster for generating a lateral propulsive force based on the driving force of the driving source, and a rudder or the like which is a mechanism for freely determining the traveling direction of the ship. Then, during automatic operation such as automatic berthing, the interface 11 supplies the control signals generated by the controller 13 to these components. In the case where an electronic control device is provided in the target ship, the interface 11 supplies the control signal generated by the controller 13 to the electronic control device. The interface 11 may be a wireless interface such as a network adapter for performing wireless communication, or a hardware interface for connecting to an external device by a cable or the like. Also, the interface 11 may perform interface operation with various peripheral devices such as an input device, a display device, a sound output device, and the like.

The memory 12 may be constituted by various volatile and non-volatile memories such as a RAM (Random Access Memory), a ROM (Read Only Memory), a hard disk drive, a flash memory, and the like. The memory 12 stores programs for the controller 13 to perform predetermined processes. The programs executed by the controller 13 may be stored in a storage medium other than the memory 12.

In addition, the memory 12 stores information necessary for the processing performed by the information processing device 1 in the present embodiment. For example, the memory 12 may store map data including information about the positions of the berthing places. In another example, the memory 12 stores information about the size of the down-sampling when down-sampling is performed on the point cloud data obtained when the lidar 3 performs scanning for one period.

The controller 13 includes one or more processors such as a CPU (Central Processing Unit), a GPU (Graphics Processing Unit), and a TPU (Tensor Processing Unit), and controls the entire information processing device 1. In this case, the controller 13 performs processing for the operation support or the like of the target ship by executing the programs stored in the memory 12 or the like.

The controller 13 functionally includes a berthing place detection unit 15 and a berthing parameter calculation unit 16. The berthing place detection unit 15 performs processing for the detection of the berthing place based on the point cloud data output by the lidar 3. The berthing parameter calculation unit 16 calculates parameters (also referred to as "berthing parameters") necessary for berthing to the berthing place. Here, the berthing parameters include a distance between the target ship and the berthing place (a quay distance), an approach angle of the target ship to the berthing place, a speed at which the target ship approaches the berthing place (a berthing speed), etc. Further, the berthing parameter calculation unit 16 calculates information (also referred to as "reliability information") indicating the reliability of the berthing to the berthing place based on the processing result of the berthing place detection unit 15 and the berthing parameters. The controller 13 functions as "an acquisition means", "a marker position acquisition means", "a search range setting means", "a distance calculation means", and a computer for executing a program.

The processing performed by the controller 13 is not limited to being implemented in software by a program, but may be implemented by any combination of hardware, firmware, and software. The processing performed by the controller 13 may also be implemented using user programmable integrated circuitry such as, for example, a FPGA (Field-Programmable Gate Array) or a microcomputer. In this case, the integrated circuit may be used to implement a program that the controller 13 executes in this example.

[Outline of berthing support processing]

Next, an outline of the berthing support processing executed by the information processing device 1 will be described. The information processing device 1 generates a straight line along the side surface of the berthing place (hereinafter also referred to as "berthing side straight line L") based on the point cloud data of the lidar 3 measured in the direction in which the berthing place is present. In other words, the berthing side straight line L is a straight line along the side surface of the quay at the berthing place. Then, the information processing device 1 calculates the berthing parameters such as the quay distance based on the berthing side straight line L.

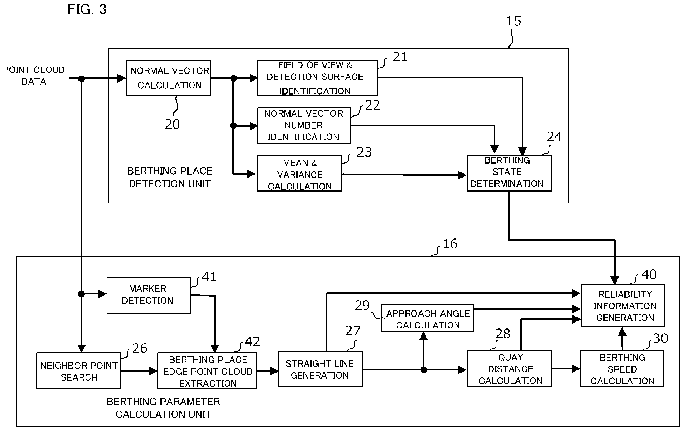

FIG. 3 is a functional block diagram of the berthing place detection unit 15 and the berthing parameter calculation unit 16 related to the berthing support processing. The berthing place detection unit 15 functionally includes a normal vector calculation block 20, a field of view and detection surface identification block 21, a normal vector number identification block 22, a mean and variance calculation block 23, and a berthing state determination block 24. The berthing parameter calculation unit 16 functionally includes a neighbor point search block 26, a straight line generation block 27, a quay distance calculation block 28, an approach angle calculation block 29, a berthing speed calculation block 30, a reliability information generation block 40, a marker detection block 41, and a berthing place edge point cloud extraction block 42.

The normal vector calculation block 20 calculates normal vectors of a surface (also referred to as a "quay-facing surface") formed by the berthing place based on the point cloud data that the lidar 3 generates in the direction in which the berthing place exists. In this case, the normal vector calculation block 20 calculates the normal vectors described above based on the point cloud data generated by the lidar 3 whose measurement range includes the side of the berthing place of the target ship, for example. The information about the measurement range of the lidar 3 and the direction of the berthing place may be registered in advance in the memory 12, for example.

In this case, the normal vector calculation block 20 preferably performs down-sampling of the point cloud data and removal of the data obtained by the reflection of the laser beam by the water surface (also referred to as "water surface reflection data"), respectively.

In this case, first, the normal vector calculation block 20 removes, from the point cloud data generated by the lidar 3, the data existing below the water surface position as the water surface reflection data (i.e., erroneous detection data). Incidentally, the normal vector calculation block 20 estimates the water surface position based on the mean value in the height direction of the point cloud data generated by the lidar 3 when there is no object other than the water surface in the vicinity, for example. Then, the normal vector calculation block 20 performs down-sampling, which is a process of integrating the measured points into each grid space of a predetermined size, for the point cloud data obtained after removing the water surface reflection data. Then, the normal vector calculation block 20 calculates the normal vectors using a plurality of measured points in the periphery for each measured point indicated by the point cloud data after the down-sampling. Note that the down-sampling may be performed before the removal of the water surface reflection data.

The field of view and detection surface identification block 21 identifies the surface of the berthing place existing within the viewing angle of the lidar 3 (also referred to as "surface within field of view") and the surface of the berthing place detected based on the normal vectors calculated by the normal vector calculation block 20 (also referred to as "detection surface"). In this case, the field of view and detection surface identification block 21 determines whether or not the upper surface or/and the side surface of the berthing place is included as the surface within field of view and the detection surface.

The normal vector number identification block 22 extracts the normal vectors in the vertical direction and the normal vectors in the direction perpendicular thereto (i.e., the horizontal direction) from among the normal vectors calculated by the normal vector calculation block 20, respectively, and calculates the number of the normal vectors in the vertical direction and the number of the normal vectors in the horizontal direction. Here, the normal vector number identification block 22 regards the normal vector in the vertical direction as representing the normal to the measured point on the upper surface of the berthing place and regards the normal vector in the horizontal direction as representing the normal to the measured point on the side surface of the berthing place, and calculates each number of the normal vectors as one index of the reliability regarding the berthing place.

The mean and variance calculation block 23 extracts the normal vectors in the vertical direction and the normal vectors in the direction perpendicular thereto (i.e., the horizontal direction) from among the normal vectors calculated by the normal vector calculation block 20, and calculates the mean and variance of the normal vectors in the vertical direction and the mean and variance of the normal vectors in the horizontal direction.

The berthing state determination block 24 acquires the processing results of the field of view and detection surface identification block 21, the normal vector number identification block 22, and the mean and variance calculation block 23, which are identified or calculated based on the same point cloud data, as the determination results representing the detection state of the berthing place at the time of generating the point cloud data. The berthing state determination block 24 supplies the processing results of the field of view and detection surface identification block 21, the normal vector number identification block 22, and the mean and variance calculation block 23 to the berthing parameter calculation unit 16 as the determination results of the detection state of the berthing place.

The marker detection block 41 detects at least one marker provided on the berthing place based on the measured points constituting the point cloud data, and acquires the coordinate position of the at least one marker thus detected.

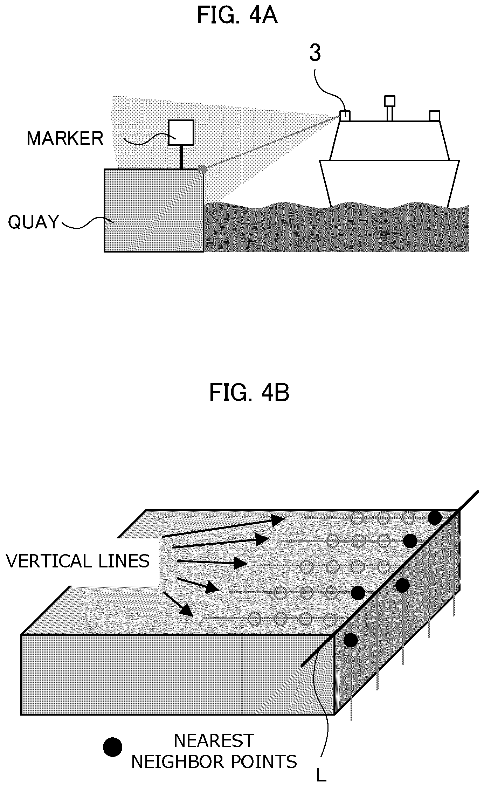

The neighbor point search block 26 performs a process of searching for the nearest neighbor point closest to the target ship for each vertical line on the basis of the measured points constituting the point cloud data. For example, when the lidar 3 captures a quay to be berthed as shown in FIG. 4A, the nearest neighbor point, which is the closest point to the ship, becomes the edged portion between the upper surface and the side surface of the quay. The set of the points obtained by performing the nearest neighbor search for each vertical line is the gathering of the points near the edge of the quay.

Based on the coordinate position of the at least one marker acquired by the marker detection block 41 and the nearest neighbor points searched by the neighboring point search block 26, the berthing place edge point cloud extraction block 42 extracts the point cloud of the edge portion of the berthing place within the search range.

By using principal component analysis or least squares method, the straight line generation block 27 generates the berthing side straight line L, which is a straight line along the side surface of the berthing place, based on the nearest neighbor points determined by the neighbor point search block 26. According to such a process, the straight line generation block 27 can generate a berthing side straight line L shown in FIG. 4B. FIG. 4B is a perspective view of the quay showing the berthing side straight line L.

The quay distance calculation block 28 calculates the quay distance corresponding to the shortest distance between the target ship and the berthing place based on the berthing side straight line L generated by the straight line generation block 27. Here, when there are a plurality of lidars 3 capable of measuring the berthing place, the quay distance calculation block 28 collects the point cloud data of the plurality of lidars 3 to generate the berthing side straight line L, and calculates the shortest distance with each lidar 3 as the quay distance. Alternatively, the quay distance calculation block 28 may generate the berthing side straight line L for each point cloud data of the lidar 3, and calculate the shortest distance between each berthing side straight line L and each lidar 3 as the quay distance. The quay distance calculation block 28 may calculate the shortest distance from a reference point such as the center position of the ship to the berthing side straight line L as the quay distance. Incidentally, instead of regarding the shortest distance for each lidar 3 as the quay distance, the quay distance calculation block 28 may determine the shortest one of shortest distances for the lidars 3 as the quay distance, and may determine the mean of these shortest distances as the quay distance. Incidentally, the shortest distance to the berthing side straight line L may be obtained by calculating the length of the normal line to the berthing side straight line L on the xy plane.

The approach angle calculation block 29 calculates the approach angle of the target ship with respect to the berthing place based on the berthing side straight line L generated by the straight line generation block 27. Specifically, the approach angle calculation block 29 calculates the approach angle using "atan2" which is a function to obtain the arctangent from two arguments defining the tangent. More specifically, the approach angle calculation block 29 calculates the approach angle by calculating the function atan2 from the directional vector of the berthing side straight line L.

The berthing speed calculation block 30 calculates the berthing speed at which the target ship approaches the berthing place, based on the quay distance calculated by the quay distance calculation block 28. For example, the berthing speed calculation block 30 calculates the time change of the quay distance (the shortest distance) as the berthing speed.

The reliability information generation block 40 generates the reliability information on the basis of the processing results of the berthing state determination block 24, the straight line generation block 27, the quay distance calculation block 28, and the approach angle calculation block 29.

Here, a description will be given of a first specific example of generating the reliability information. The reliability information generation block 40 generates a flag for each element such as the viewing angle at the time of detection of the berthing place, the surface detection of the berthing place, the number and variance of the normal vectors, and generates a vector of the generated flags as the reliability information. Hereafter, it is assumed that the reliability of the corresponding element is high when the flag is "1" and the reliability of the corresponding element is low when the flag is "0".

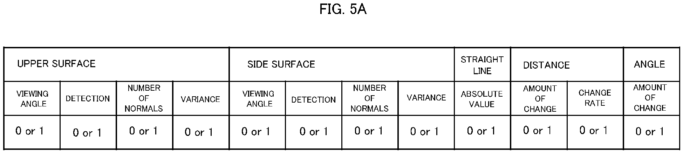

FIG. 5A is a diagram illustrating an example of the data structure of the reliability information generated by the reliability information generation block 40. As shown in FIG. 5A, the reliability information has items of "top surface", "side surface", "straight line", "distance", and "angle". In addition, the item "top surface" has sub-items "viewing angle", "detection", "number of normals", and "variance". The item "side surface" has sub-items "viewing angle", "detection", "number of normals", and "variance". The item "straight line" has a sub-item "absolute value". The item "distance" has a sub-item "amount of change" and "change rate", and the item "angle" has a sub-item "amount of change".

Here, the reliability information generation block 40 registers, in the sub-item "viewing angle" of the item "upper surface", a flag "1" when the upper surface of the berthing place is within the range of the viewing angle and a flag "0" when the upper surface is out of the viewing angle. The reliability information generation block 40 registers, in the sub item "detection" of the item "upper surface", a flag "1" when the upper surface of the berthing place is the detection surface and a flag "0" when the upper surface is not the detection surface. Further, the reliability information generation block 40 registers, in the sub-item "number of normals" of the item "upper surface", a flag "1" when the number of normal vectors with respect to the upper surface of the berthing place is equal to or larger than a predetermined threshold value (for example, 10) and a flag "0" when the number of normal vectors is smaller than the threshold value. Further, the reliability information generation block 40 registers, in the sub-item "variance" of the item "upper surface", a flag "1" when the variance of x,y,z component of the normal vector with respect to the upper surface of the berthing place is smaller than a predetermined threshold value (for example, 1.0) and a flag "0" when any of the variances is equal to or larger than the threshold value. Further, the reliability information generation block 40 registers, in each sub-item of the item "side surface", the flags defined by the same rules as the sub-items of the item "upper surface".

In addition, the reliability information generation block 40 registers, in the sub item "absolute value" of the item "straight line", a flag representing the reliability of the berthing side straight line L generated by the generation method described later. For example, when the lidars 3 are respectively provided at front and rear portion of the target ship, the reliability information generation block 40 registers a flag "1" when all the component-by-component differences between the direction vector of the berthing side straight line L generated by the generation method described later and the direction vector of the straight line connecting the nearest neighbor points of the front and rear lidars 3 on the target ship are smaller than the threshold value, and a flag "0" when any one of the differences is equal to or larger than the threshold value.

Further, the reliability information generation block 40 registers, in the sub-item "amount of change" of the item "distance", a flag "1" when the amount of change of the quay distance calculated by the quay distance calculation block 28 from one time point before is smaller than a predetermined threshold value (e.g., 1.0m) and a flag "0" when the amount of change is equal to or larger than the threshold value . Further, the reliability information generation block 40 registers, in the sub-item "change rate" of the item "distance", a flag "1" when the change rate of the quay distance calculated by the quay distance calculation block 28 from one time point before is smaller than a predetermined threshold value (for example, $\pm$ 10%) and a flag "0" when the change rate is equal to or larger than the threshold value. The reliability information generation block 40 registers, in the sub item "amount of change" of the item "angle", a flag "1" when the amount of change of the approach angle calculated by the approach angle calculation block 29 from one time point before is smaller than a predetermined threshold value (for example, 1.0 degrees) and a flag "0" when the amount of change is equal to or larger than the threshold value.

Incidentally, each of the threshold values described above is set to a suitable value previously stored in the memory 12 or the like, for example. Further, the reliability information may be generated for each lidar 3.

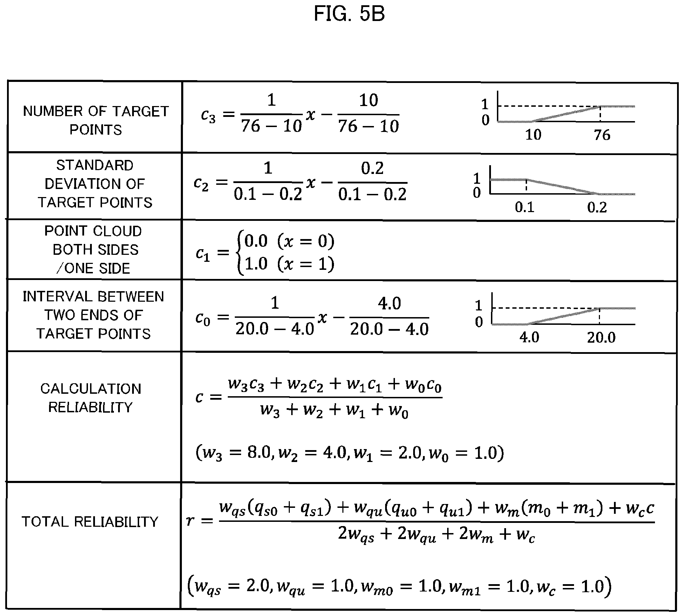

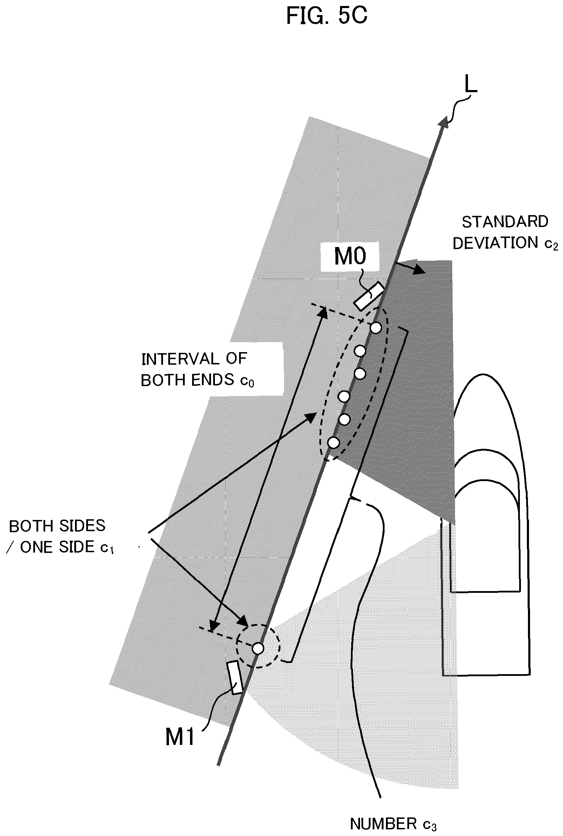

Next, a second specific example of the generation of the reliability information will be described. FIG. 5B shows an example of indexes and reliability included in the reliability information. FIG. 5C is a bird's-eye view of the target ship and the berthing place, on which the indexes shown in FIG. 5B are specified. Here, the quay which is the berthing place is provided with markers M0 and M1 which are reference objects of berthing. The information processing device 1 detects the markers M0 and M1 on the basis of the point cloud data of the lidar 3, and executes various processes such as the generation of the berthing side straight line L using the measured points (the set of the neighbor points) near the edge of the berthing place existing between the markers M0 and M1. Hereafter, the measured points near the edge of the berthing place that exist between the markers M0 and M1 are also referred to as "target points". Incidentally, when the markers M0 and M1 are not detected, it is assumed that all the set of the neighbor points is regarded as the target points, for example.

The index "$c_3$" is an index based on the number of the target points. Here, as an example, the index $c_3$ is represented by a linear function using the number of the target points as the variable x. The index "$c_2$" is an index based on the standard deviation of the target points. Here, as an example, the index $c_2$ is represented by a linear function using the standard deviation of the target points as the variable x. The index "$c_1$" is an index indicating whether or not two lidars 3 were able to measure both the front side and the rear side of the quay. Here, as an example, the index $c_1$ is set to "1.0" when both sides of the quay were measured, and is set to "0.0" when only one side was measured. The index "$c_0$" is an index based on the interval between the two ends of the target points (both ends along the berthing side straight line L), and is represented by a linear function using the above-described interval between the two ends as the variable x. The indexes $c_0$ to $c_3$ are calculated to be limited in a range from 0 to 1.

The calculation reliability "c" is reliability based on the indexes $c_0$ to $c_3$ described above. Here, the calculation reliability c is a weighted mean of the indexes $c_0$ to $c_3$ using the weighting factors "$w_0$" to "$w_3$" according to the importance with respect to the indexes $c_0$ to $c_3$. Further, an exemplary setting of the weighting factors $w_0$ to $w_3$ is shown. Since each

index $c_0$ to $c_3$ is in the range from 0 to 1, the calculation reliability c, which is the weighted mean of them, is also calculated as a numerical value in the range from 0 to 1.

A total reliability "r" is reliability based on a side surface detection reliability "$q_s$" which is a reliability regarding detection of the side surface of the quay, a top detection reliability "$q_u$" which is a reliability regarding detection of the top surface of the quay, a marker detection reliability "$m_0$" regarding the detection of the marker M0, a marker detection reliability "$m_1$" regarding the detection of the marker M1, and the calculation reliability c. Here, the total reliability r is a weighted mean of the reliability $q_s$, $q_u$, $m_0$, $m_1$, c using the weighting factors "$w_{qs}$", "$w_{qu}$", "$w_{m0}$", "$w_{m1}$", "$w_c$" according to the importance with respect to the reliability $q_s$, $q_u$, $m_0$, $m_1$, c. Further, an exemplary setting of the weighting factors $w_{qs}$, $w_{qu}$, $w_{m0}$, $w_{m1}$, $w_c$ is shown. For example, the information processing device 1 may calculate the side surface detection reliability $q_s$ based on the item "side surface" of the reliability information shown in FIG. 5A, and calculate the top surface detection reliability $q_u$ based on the item "top surface" of the reliability information in FIG. 5A. Further, the information processing device 1 may calculate the marker detection reliability $m_0$ and $m_1$ based on the number of the measured points of the markers M0 and M1 in the point cloud data measured by each lidar 3, for example. The side surface detection reliability $q_s$, the top surface detection reliability $q_u$, the marker detection reliability $m_0$, and the marker detection reliability $m_1$ are calculated to be in the range from 0 to 1. In addition, when both the front part and the rear part of the quay are detected, the side surface detection reliability $q_{s0}$ of the front quay, the side surface detection reliability $q_{s1}$ of the rear quay, the top surface detection reliability $q_{u0}$ of the front quay, and the top surface detection reliability $q_{u1}$ of the rear quay are calculated. Since the side surface detection reliability $q_s$, the top surface detection reliability $q_u$, the marker detection reliability $m_0$, the marker detection reliability $m_1$, and the calculation reliability c are in the range from 0 to 1, the total reliability r, which is the weighted mean of them, is also calculated as a numerical value in the range from 0 to 1. Therefore, it can be seen that the closer the total reliability r is to 1, the higher the reliability of the calculated berthing parameters, and the closer the total reliability r is to 0, the lower the reliability of the calculated berthing parameters.

That is, the reliability information generated by the second specific example includes the indexes and reliability calculated by the above-described method.

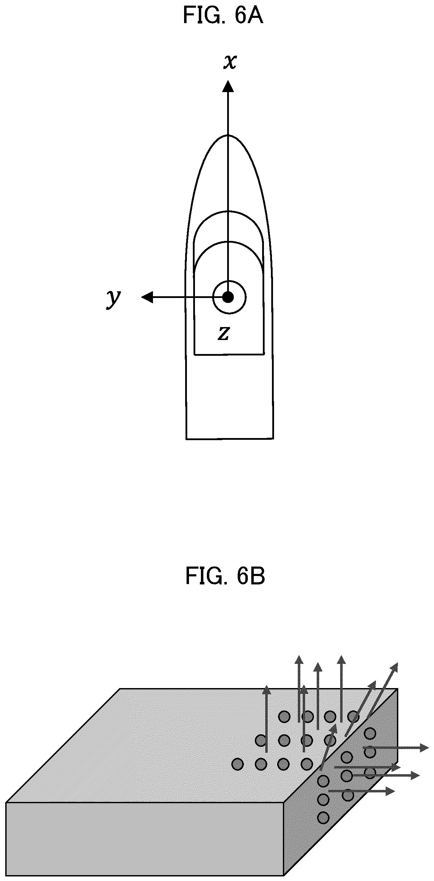

Next, a specific example of the processing by the normal vector calculation block 20, the normal vector number identification block 22, and the mean and variance calculation block 23 will be described with reference to FIGS. 6A and 6B.

FIG. 6A is a diagram showing an example of a ship coordinate system based on the hull of the target ship. As shown in FIG. 6A, here, the front (forward) direction of the target ship is defined as "x" coordinate, the side direction of the target ship is defined as "y" coordinate, and the height direction of the target ship is defined as "z" coordinate. The measurement data of the coordinate system based on the lidar 3, which is measured by the lidar 3, is transformed into the ship coordinate system shown in FIG. 6A. Incidentally, the processing of converting the point cloud data of the lidar-based coordinate system installed in the mobile body to the coordinate system of the mobile body is disclosed in the International Publication WO2019/188745, for example.

FIG. 6B is a perspective view of a berthing place (quay in this case) showing the measured points representing the measured position measured by the lidar 3 and the normal vectors calculated based on the measured points with respect to the quay. In FIG. 6B, the measured points are shown by dots, and the normal vectors are shown by arrows. FIG. 6B shows an example in which both the upper surface and the side surface of the quay could be measured by the lidar 3.

As shown in FIG. 6B, the normal vector calculation block 20 calculates the normal vectors for the measured points on the side surface and the upper surface of the quay. Since the normal vector is a vector perpendicular to the plane or curved surface of interest, the normal vector is calculated using a plurality of measured points that forms a plane. Therefore, the normal vector calculation block 20 sets a grid having a predetermined length in the vertical and horizontal directions or a circle having a radius of a predetermined length, and calculates the normal vector using the measured points existing therein. In this case, the normal vector calculation block 20 may calculate the normal vector for each measured point, or may calculate the normal vector for each predetermined interval. Then, the normal vector number identification block 22 determines the normal vector whose z component is larger than a predetermined threshold value as the normal vector oriented in the vertical direction. It is assumed that the normal vector is vectorized to be a unit vector. Further, the normal vector number identification block 22 determines the normal vector whose z component is smaller than the predetermined threshold value as the normal vector oriented in the horizontal direction. Then, the normal vector number identification block 22 identifies the number of normal vectors in the vertical direction (five in this case) and the number of the normal vectors in the horizontal direction (four in this case). Further, the mean and variance calculation block 23 calculates the mean and variance of the normal vectors in the vertical direction and the mean and variance of the normal vectors in the horizontal direction. It is noted that the normal vectors become oblique at the edge portion because the measured points around the edge portion exist on the upper and side surfaces.

[Details of generation method of berthing side straight line]

Next, a generation method of the berthing side straight line L will be described.

(First generation method)

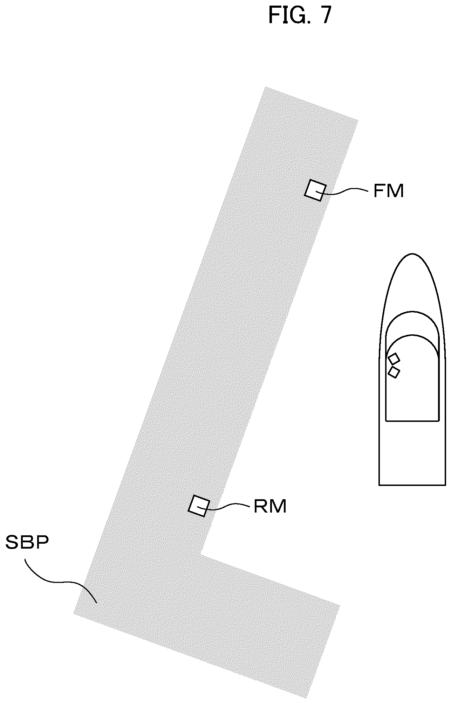

FIG. 7 is a diagram illustrating an example of a berthing place in which a front marker and a rear marker are provided.

In the present generation method, for example, description will be given of a case where a ship is berthed to a berthing place SPB having an L-shape as shown in FIG. 7. Further, in the the present generation method, it is assumed that two markers having a high reflectance property such as a retroreflective plate is provided in the berthing place SBP. Further, in the explanation of the present generation method, unless otherwise mentioned, the marker provided in the berthing place SBP on the front side of the ship is referred to as a front marker FM, and the marker provided on the rear side of the ship is referred to as a rear marker RM. Further, in the present generation method, it is assumed that the front marker FM and the rear marker RM are provided at the positions where the heights from the upper surface of the berthing place SBP are different from each other. Incidentally, as long as it is possible to identify whether it is located on the front side or rear side of the ship, for example, the front marker FM and the rear marker RM may have different shapes from each other, or may have different sizes from each other.

The berthing parameter calculation unit 16 acquires a point cloud data FMG constituting the front marker FM and a point cloud data RMG constituting the rear marker RM, respectively, by performing a process of extracting the measured points having the intensity equal to or higher than a predetermined intensity from the point cloud data generated by the lidar 3. The berthing parameter calculation unit 16 acquires the coordinate position $M_f[m_{fx}\ m_{fy}\ m_{fz}]^T$ of the front marker FM in the ship coordinate system based on the center of gravity of the measured points included in the point cloud data FMG. Also, the berthing parameter calculation unit 16 acquires the coordinate position $M_r[m_{rx}\ m_{ry}\ m_{rz}]^T$ of the rear marker RM in the ship coordinate system based on the center of gravity of the measured points included in the point cloud data RMG.

Thereafter, the berthing parameter calculation unit 16 sets a rectangular extraction window EWA on the xy plane based on the coordinate position $M_f$ of the front marker FM, the coordinate position $M_r$ of the rear marker RM, and the predetermined margin $\Delta w$.

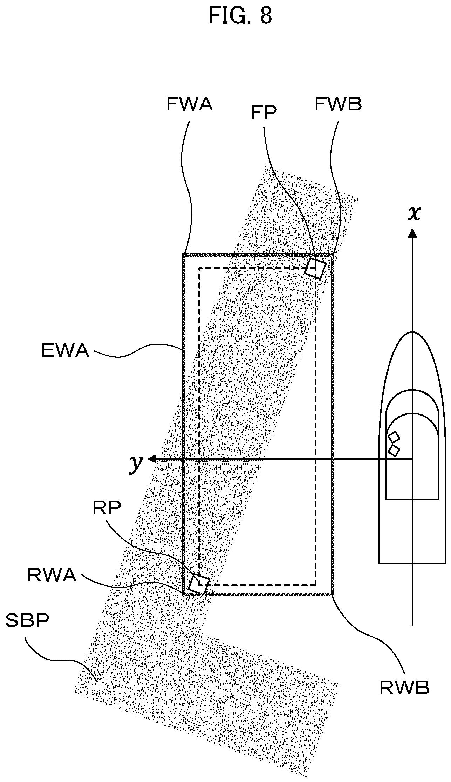

Specifically, for example, the extraction window EWA is set as a rectangular area having the coordinate position FWA $[m_{fx}+\Delta w\ m_{ry}+\Delta w]^T$, the coordinate position FWB $[m_{fx}+\Delta w\ m_{fy}-\Delta w]^T$, and the coordinate position RWA $[m_{rx}-\Delta w\ m_{ry}+\Delta w]^T$, and the coordinate position RWB $[m_{rx}-\Delta w\ m_{fy}-\Delta w]^T$ as the vertices, as shown in FIG. 8. FIG. 8 is a top view illustrating the extraction window EWA.

The extraction window EWA is not limited to being set as a rectangular (or a substantially rectangular) area on the xy plane. For example, the extraction window EWA may be set as an are of a rectangular parallelepiped (or a substantially rectangular parallelepiped) in the xyz space. In such cases, a relatively small coordinate value out of the coordinate values $m_{fz}$ and $m_{rz}$ may be set as an upper limit value in the z-direction of the extraction window EWA. That is, the berthing parameter calculation unit 16 can set a rectangular area or a rectangular parallelepiped area corresponding to the coordinate positions $M_f$ and $M_r$ as a search area for the edge of the berthing place SBP.

As described above, the berthing parameter calculation unit 16 performs a process of searching for the nearest neighbor point closest to the target ship for each vertical line from the measured points constituting the point cloud data of the berthing place SBP, and acquires the neighbor point set SG of the berthing place SBP.

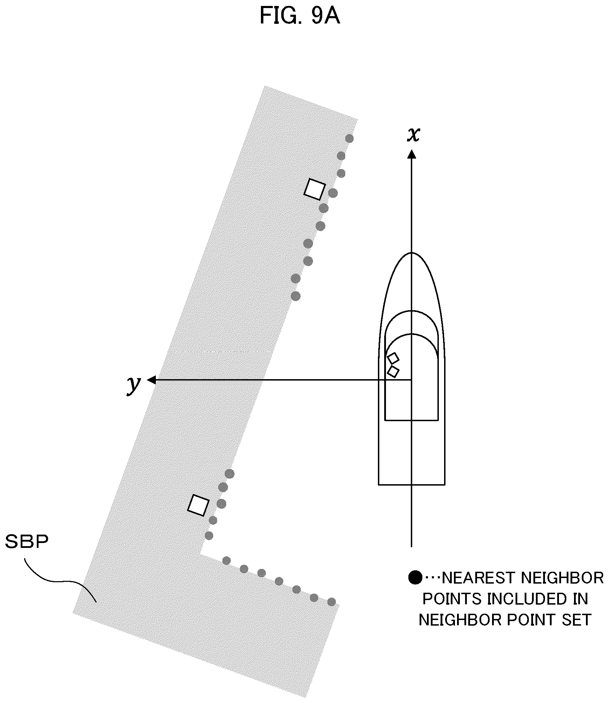

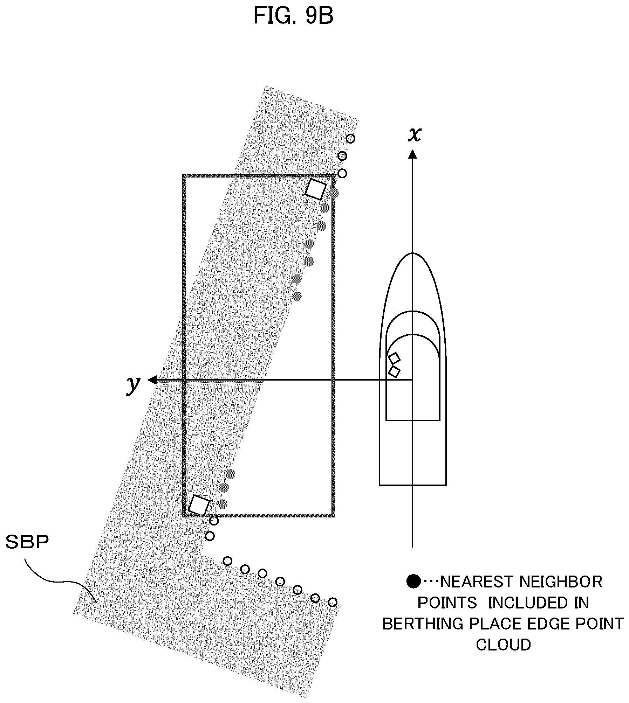

The berthing parameter calculation unit 16 acquires point cloud data (hereinafter, also referred to as "berthing place edge point cloud") including a plurality of measured points (the nearest neighbor points) constituting the edge (in detail, the boundary of the upper surface and the side surface) of the berthing place SBP for the neighbor point set SG by extracting the measured points belonging to the area of the extraction window EWA. According to such a process, for example, it is possible to extract a neighbor point set SG including the nearest neighbor points as shown in FIG. 9A, and it is possible to obtain a berthing place edge point cloud SP including the nearest neighbor points as shown in FIG. 9B. FIG. 9A is a diagram showing the nearest neighbor point for each vertical line in the berthing place SBP. FIG. 9B is a diagram illustrating an example of nearest neighbor points acquired as an berthing place edge point cloud by using the extraction window EWA.

Then, the berthing parameter calculation unit 16 generates the berthing side straight line L by applying the principal component analysis or the least squares method to the measured points (the nearest neighbor points) included in the berthing place edge point cloud SP.

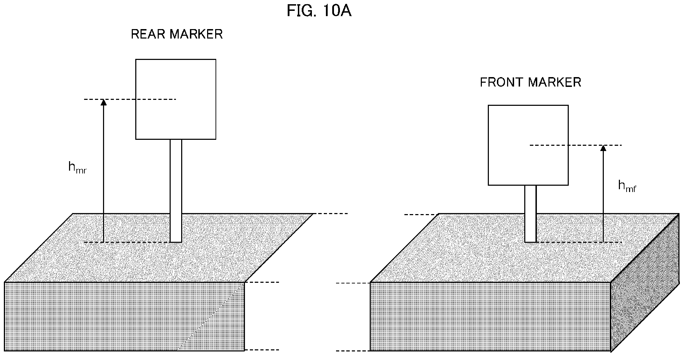

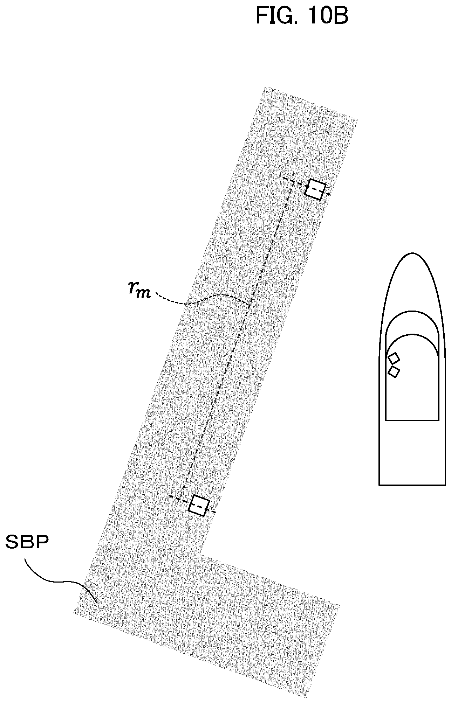

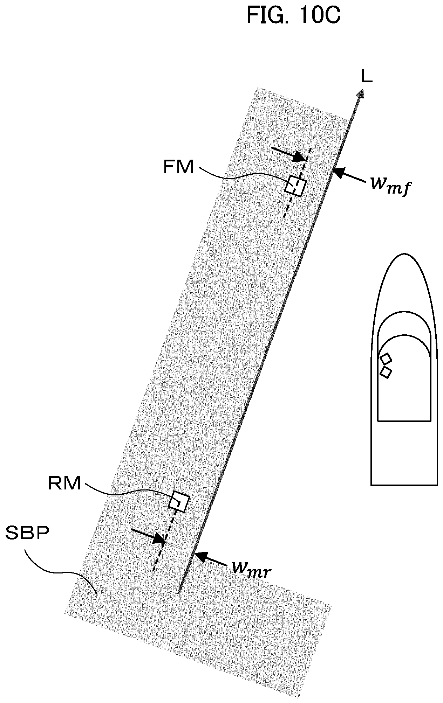

According to the present generation method, the berthing parameter calculation unit 16 may calculate, for example, the height $h_{mf}$ of the installation position of the front marker FM with respect to the upper surface of the berthing place SBP based on the mean value of the z coordinate values of the plurality of measured points corresponding to the upper surface of the berthing place SBP and the z coordinate value $m_{fz}$ of the coordinate position $M_f$. Also, according to the present generation method, the berthing parameter calculation unit 16 may calculate, for example, the height $h_{mr}$ of the installation position of the rear marker RM with respect to the upper surface of the berthing place SBP based on the mean value of the z coordinate values of the plurality of measured points corresponding to the upper surface of the berthing place SBP and the z coordinate value $m_{rz}$ of the coordinate position $M_r$ (see the FIG. 10A). Further, according to the present generation method, the berthing parameter calculation unit 16 may calculate the marker interval $r_m$ corresponding to the

distance between the front marker FM and the rear marker RM based on, for example, the coordinate position $M_f$ and $M_r$ (see FIG. 10B). Further, according to the present generation method, the berthing parameter calculation unit 16 may calculate, for example, the distance $w_{mf}$ from the berthing side straight line L to the front marker FM, and the distance $w_{mr}$ from the berthing side straight line L to the rear marker RM (see FIG. 10C). Further, according to the present generation method, the berthing parameter calculation unit 16 may store the calculation result of the height $h_{mf}$, the height $h_{mr}$, the marker interval $r_m$, the distance $w_{mf}$, and the distance $w_{mr}$ in the storage medium such as the memory 12. FIG. 10A shows the heights $h_{mf}$ and $h_{mr}$ of the marker installation position. FIG. 10B is a top view illustrating the marker interval $r_m$. FIG. 10C is a top view showing the distances $w_{mf}$ and $w_{mr}$.

Further, according to the present generation method, instead of the predetermined margin $\Delta w$, the margin $w_{mf}$ corresponding to the distance from the berthing side straight line L to the front marker FM (the measured value) and the margin $w_{mr}$ corresponding to the distance from the berthing side straight line L to the rear marker RM (the measured value) may be used to generate the extraction window EWA. In such a case, the extraction window EWA is set as a substantially rectangular area having the coordinate position FWA $[m_{fx}+w_{mf}\ m_{ry}+w_{mf}]^T$, the coordinate position FWB $[m_{fx}+w_{mf}\ m_{fy}-w_{mf}]^T$, the coordinate position RWA $[m_{rx}-w_{mr}\ m_{ry}+w_{mr}]^T$, the coordinate position RWB $[m_{rx}-w_{mr}\ m_{fy}-w_{mr}]^T$ as the vertexes. That is, the berthing parameter calculation unit 16 can use the distance from the berthing side straight line L to the front marker FM and the distance from the berthing side straight line L to the rear marker RM to set the search range of the edge of the berthing place SBP.

(Second generation method)

In the present generation method, description will be given of the case where data corresponding to one of the two markers provided in the berthing place SBP is obtained and data corresponding to the other of the two markers is not obtained.

The berthing parameter calculation unit 16 acquires a point cloud data CMG corresponding to one marker CM of the two markers provided in the berthing place SBP, for example, by performing a process of extracting the measured points having an intensity equal to or higher than a predetermined intensity from the point cloud data generated by the lidar 3. Further, the berthing parameter calculation unit 16 acquires the coordinate position CP $[m_{cx}\ m_{cy}\ m_{cz}]^T$ of the marker CM in the ship coordinate system based on the center of gravity of the measured points included in the point cloud data CMG. Further, the berthing parameter calculation unit 16 calculates the height $h_{mc}$ of the installation position of the marker CM with respect to the upper surface of the berthing place SBP based on the mean value of the z-coordinate values of the measured points corresponding to the upper surface of the berthing place SBP and the z-coordinate value $m_{cz}$ of the coordinate position CP.

The berthing parameter calculation unit 16 compares the height $h_{mc}$ with the height $h_{mf}$ and $h_{mr}$ calculated in the past to determine whether the marker CM is the front marker FM or the rear marker RM. The height $h_{mf}$ and $h_{mr}$ may be stored in the memory 12 as the information related to the berthing support of the target ship, for example.

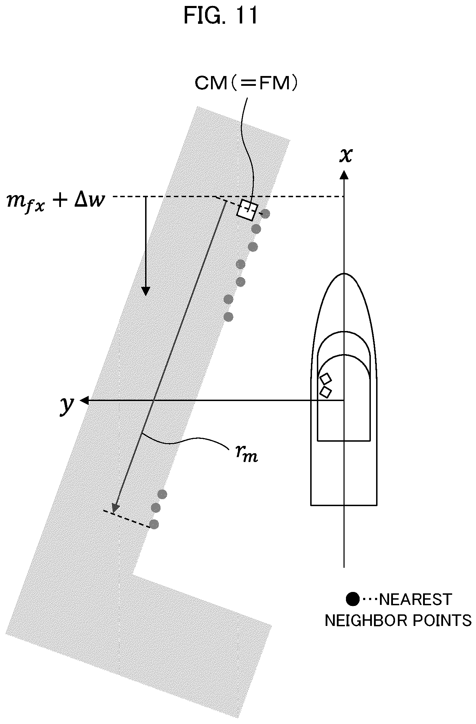

For example, the berthing parameter calculation unit 16 determines that the marker CM is the front marker FM when the height $h_{mc}$ is closer to the height $h_{mf}$ than the height $h_{mr}$. Further, when the berthing parameter calculation unit 16 determines that the marker CM is the front marker FM, it extracts the measured points having the x coordinate value obtained by adding a predetermined margin $\Delta w$ to the x coordinate value $m_{cx}$ of the coordinate position CP, from the neighbor point set SG. Further, the berthing parameter calculation unit 16 acquires the berthing place edge point cloud SP by extracting the measured points having the distance to the marker CM equal to or smaller than the previously calculated marker interval $r_m$, from the measured points detected as described above. That is, when it is determined that the marker CM is the front marker FM, the data having the x-coordinate value $x_i$ and the y-coordinate value $y_i$ satisfying both of the following Formulas (1) and (2) are acquired from the neighbor point set SG as the berthing place point edge point cloud SP. For example, when it is determined that the marker CM is the front marker FM, the berthing place edge point cloud SP including the nearest neighbor points shown in FIG. 11 is acquired. FIG. 11 is a diagram illustrating an example of the nearest neighbor points acquired when it is determined that the marker CM is the front marker.

[Formula 1]

$$x_i \leq m_{cx} + \Delta w \qquad (1)$$

[Formula 2]

$$\sqrt{(x_i - m_{cx})^2 + (y_i - m_{cy})^2} \leq r_m \qquad (2)$$

On the other hand, for example, the berthing parameter calculation unit 16 determines that the marker CM is the rear marker RM when the height $h_{mc}$ is closer to the height $h_{mr}$ than the height $h_{mf}$. Further, when the berthing parameter calculation unit 16 determines that the marker CM is the rear marker RM, it extracts the measured points having the x coordinate value equal to or smaller than the coordinate value obtained by subtracting a predetermined margin $\Delta w$ from the x coordinate value $m_{cx}$ of the coordinate position CP, from the neighbor point set SG. Further, the berthing parameter calculation unit 16 acquires the berthing place edge point cloud SP by extracting the measured points having the distance to the marker CM equal to or smaller than the marker interval $r_m$ calculated in the past, from among the measured points extracted as described above. That is, when it is determined that the marker CM is the rear marker RM, the data having the x-coordinate value $x_i$ and the y-coordinate value $y_i$ satisfying both of the following Formulas (3) and (4) is acquired from the neighbor point set SG as the berthing place edge point cloud SP.

[Formula 3]

$$m_{cx} - \Delta w \leq x_i \qquad (3)$$

[Formula 4]

$$\sqrt{(x_i - m_{cx})^2 + \left(y_i - m_{cy}\right)^2} \leq r_m \qquad (4)$$

The berthing parameter calculation unit 16 performs extraction processing to the neighbor point set SG acquired as described above, by using Equations (1) and (2) when the marker CM is determined to be the front marker FM and by using Equations (3) and (4) when the marker CM is determined to be the rear marker RM, and obtains the berthing place edge point cloud SP.

Then, the berthing parameter calculation unit 16 generates the berthing side straight line L by applying the principal component analysis or the least squares method to the measured points (the nearest neighbor points) included in the berthing place edge point cloud SP.

According to the process described above, the berthing parameter calculation unit 16 can set the search range of the edge point cloud of the berthing place SBP based on the marker interval $r_m$ and the coordinate position CP of the marker CM.

According to the present generation method, for example, when the information indicating the marker interval $r_m$ is not stored in the memory 12, instead of the marker interval $r_m$, the total length of the target ship (the length in the x-direction) may be applied to the above Formulas (2) and (4) to obtain the berthing place edge point cloud SP. For example, the berthing parameter calculation unit 16 refers to a quay map DB to acquire information on the upper limit of the total length of the ship that can be berthed. Then, if the total length of the target ship is shorter than the acquired upper limit, it is determined that the target ship can be berthed. Therefore, it is considered that the marker interval of the quay is longer than the total length of the target ship. Thus, although the search range becomes narrow, it is possible to prevent from extracting unnecessary point cloud by the search using the total length of the target ship. That is, the berthing parameter calculation unit 16 can set the search area of the berthing place SBP by using the total length of the target ship instead of the marker interval $r_m$.

Further, according to the present generation method, instead of the predetermined margin $\Delta w$, the margin $w_{mf}$ corresponding to the distance from the berthing side straight line L to the front marker FM (the measured value) may be applied to the above Formula (1). Further, according to the present generation method, instead of the predetermined margin $\Delta w$, the margin $w_{mr}$ corresponding to the distance from the berthing side straight line L to the rear marker RM (the measured value) may be applied to the above Formula (3). That is, the berthing parameter calculation unit 16 can set the search range of the edge of the berthing place SBP by using the distance from the berthing side straight line L to the marker CM.

Further, according to the present generation method, for example, when the marker information MJ related to the marker provided at the berthing place is stored in the storage medium such as the memory 12, the berthing parameter calculation unit 16 may perform the process using the information included in the marker information MJ.

As the information about the front marker FM, for example, the marker information may include information of the installation position (latitude, longitude and elevation), the height from the top surface of the quay (corresponding to the height $h_{mf}$), the distance from the quay (corresponding to the distance $w_{mf}$), the shape, and the size. Further, as information about the rear marker RM, for example, the marker information MJ may include information of the installation position (latitude, longitude and altitude), the height from the top surface of the quay (corresponding to the height $h_{mr}$), the distance from the quay (corresponding to the distance $w_{mr}$), the shape, and the size. In addition, the marker information MJ may include information relating to the marker interval (corresponding to the marker interval $r_m$).

(Third generation method)

In the present generation method, description will be given of the case where data corresponding to one of the two markers provided in the berthing place SBP is obtained, data corresponding to the other of the two markers is not obtained, and it is not possible determine whether the one marker is the front marker FM or the rear marker RM.

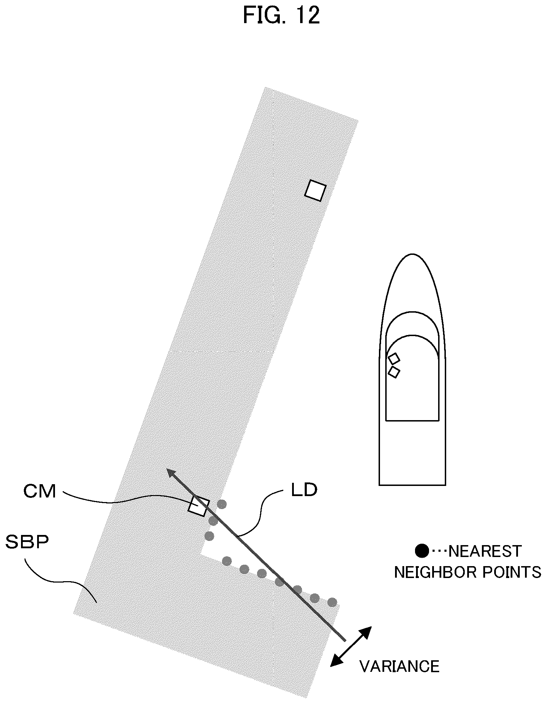

In the assumption that the marker CM is the front marker FM, by performing the same processing as that described in the second generation method, the berthing parameter calculation unit 16 acquires the data of the measured points having the x coordinate value $x_i$ and the y coordinate value $y_i$ that satisfy both of the above-described Formulas (1) and (2) as the berthing place edge point cloud SPD. Then, the berthing parameter calculation unit 16 generates a straight line LD that is a straight line representing the edge of the berthing place SBP in the assumption that the marker CM is the front marker FM, by applying the principal component analysis or the least squares method to the measured points (the nearest neighbor points) included in the berthing place edge point cloud SPD. According to such a process, for example, the berthing place edge point cloud SPD including the nearest neighbor points shown in FIG. 12 is acquired. Further, according to the process as described above, for example, the straight line LD shown in FIG. 12 is generated. FIG. 12 is a diagram illustrating an example of the straight line generated when the marker CM is assumed to be the front marker.

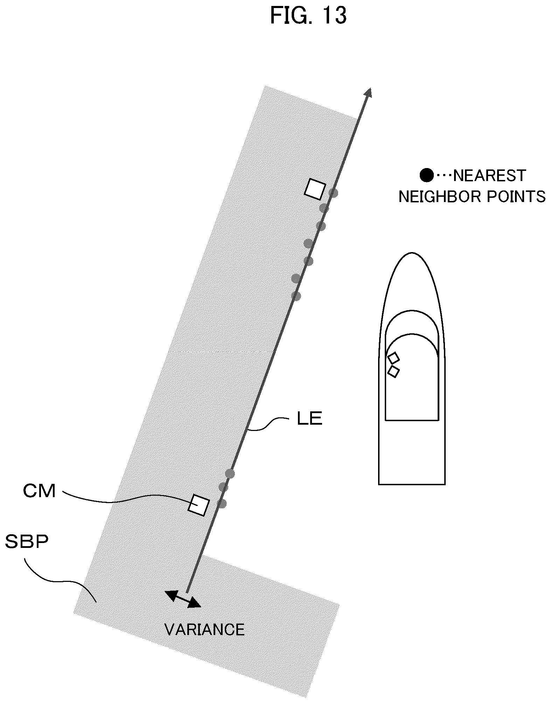

In the assumption that the marker CM is the rear marker RM, by performing the same processing as that described in the second generation method, the berthing parameter calculation unit 16 acquires the data of the measured points having the x coordinate value $x_i$ and the y coordinate value $y_i$ that satisfy both of the above-described Formulas (3) and (4) as the berthing place edge point cloud SPE. Then, the berthing parameter calculation unit 16 generates a straight line LE that is a straight line representing the edge of the berthing place SBP in the assumption that the marker CM is the rear marker RM, by applying the principal component analysis or the least squares method to the measured points (the nearest neighbor points) included in the berthing place edge point cloud SPE. According to such a process, for example, the berthing place edge point cloud SPE including the nearest neighbor points shown in FIG. 13 is acquired. Further, according to the process as described above, for example, the straight line LE shown in FIG. 13 is generated. FIG. 13 is a diagram illustrating an example of the straight line generated when the marker CM is assumed to be the rear marker.

The berthing parameter calculation unit 16 calculates the variance VD of the measured points included in the berthing place edge point cloud SPD with respect to the straight line LD and the variance VE of the measured points included in the berthing place edge point cloud SPE with respect to the straight line LE, respectively. Then, by comparing the variance VD and the variance VE, the berthing parameter calculation unit 16 selects the straight line having a relatively small variance as the berthing side straight line L along the edge of the berthing place SBP. In the examples shown in FIGS. 12 and 13, since the variance VE is smaller than the variance VD, the straight line LE is selected as the berthing side straight line L.

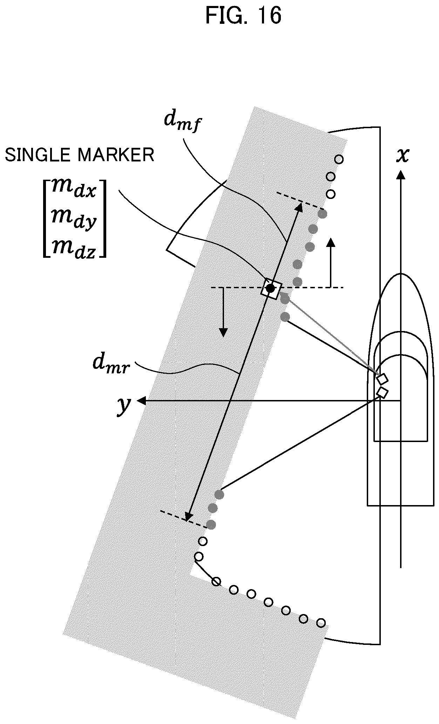

Even in the case of a single marker such that only one marker is installed in the berthing area, the berthing place edge point cloud SP can be acquired if the information indicating that the marker is a single marker is stored in the map data of the memory 12, and the front distance $d_{mf}$ and the rear distance $d_{mr}$ from the marker are stored as the information related to the berthing area in the map data of the memory 12. Note that the front distance $d_{mf}$ and the rear distance $d_{mr}$ will be described later. As shown in FIG. 16, the berthing parameter calculation unit 16 reads the marker information of the berthing area from the map data, recognizes that the target area has a single marker, performs the extraction process according to the following Formulas (5) and (6) and the extraction process according to Formulas (7) and (8) to the neighbor point set SG acquired as described above by using the coordinate of the marker CM, the front distance $d_{mf}$ and the rear distance $d_{mr}$ from the marker, and acquires the berthing place edge point cloud SP by combining the extraction results thereof. FIG. 16 is a diagram illustrating an example of a process of acquiring the berthing place edge point cloud.

[Formula 5]

$$x_i \leq m_{dx} + \Delta w \quad (5)$$

[Formula 6]

$$\sqrt{(x_i - m_{dx})^2 + (y_i - m_{dy})^2} \leq d_{mr} \quad (6)$$

[Formula 7]

$$m_{dx} - \Delta w \leq x_i \quad (7)$$

[Formula 8]

$$\sqrt{(x_i - m_{dx})^2 + (y_i - m_{dy})^2} \le d_{mf} \qquad (8)$$

[Processing flow]

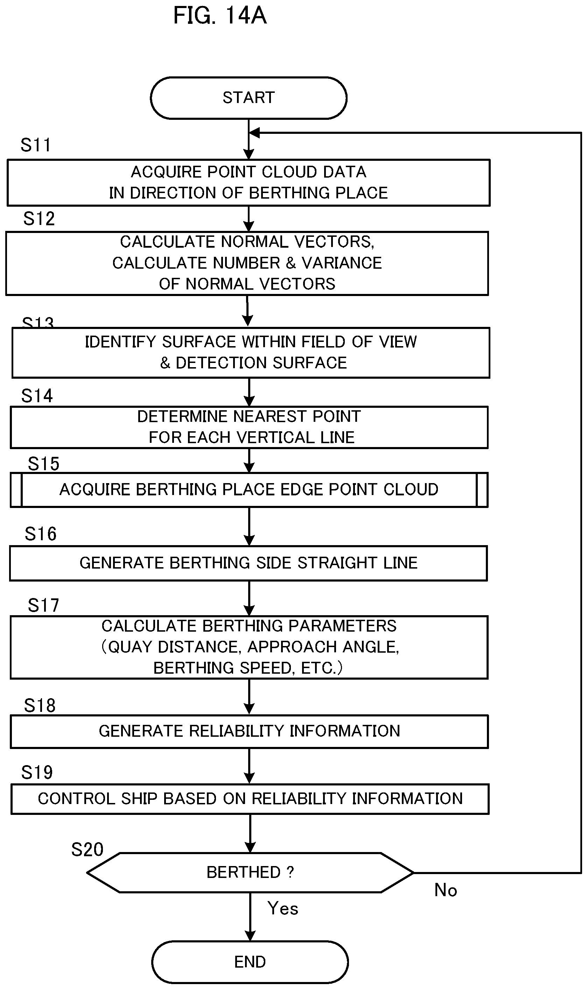

FIG. 14A is a flowchart showing an outline of berthing support processing according to present embodiment. The information processing device 1 repeatedly executes the processing of the flowchart shown in FIG. 14A.

First, the information processing device 1 acquires point cloud data in the direction of the berthing place (step S11). In this case, for example, the information processing device 1 acquires the point cloud data generated by the lidar 3 including the berthing side of the target ship as the measurement range. The information processing device 1 may further perform down-sampling of the acquired point cloud data and removal of the data reflected at the water surface.

Next, the berthing place detection unit 15 of the information processing device 1 calculates the normal vectors based on the point cloud data acquired in step S11 (step S12). Further, the berthing place detection unit 15 calculates the number of the normal vectors and the variance of the normal vectors in step S12. Further, the berthing place detection unit 15 identifies the surface within field of view and the detection surface, based on the result of the process in step S12 (step S13).

Next, the berthing parameter calculation unit 16 performs the nearest neighbor search for each vertical line on the basis of the point cloud data acquired in step S11 and calculates the nearest neighbor point for each vertical line (step S14).

Next, the berthing parameter calculation unit 16 acquires the berthing place edge point cloud including the nearest neighbor point for each vertical line based on any one of the above-described first to third generation methods (step S15).

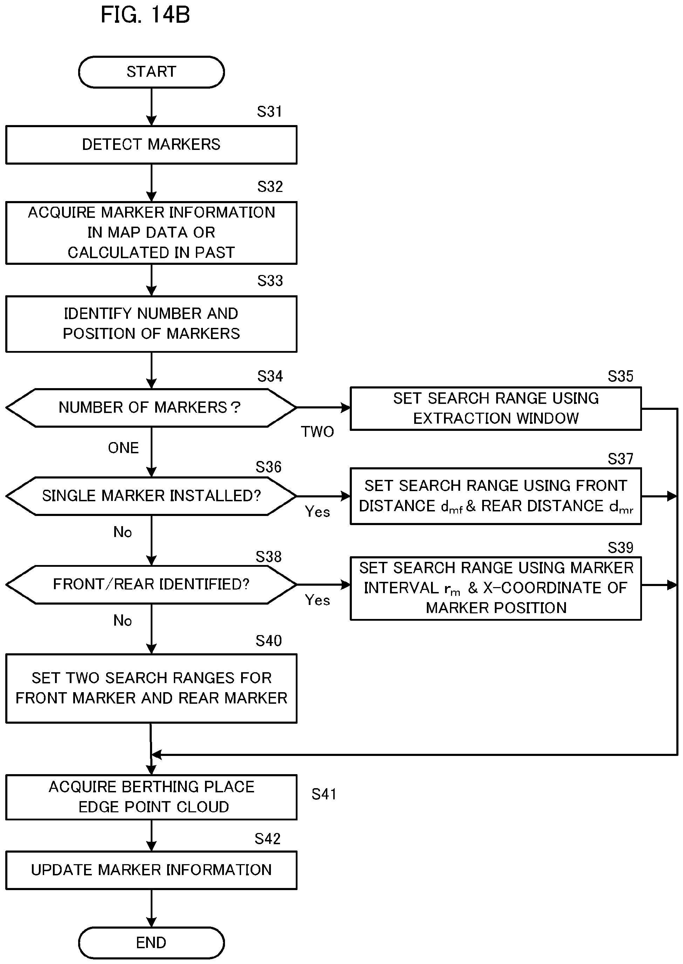

Here, an example of the process performed in step S15 will be described with reference to FIG. 14B. FIG. 14B is a flowchart illustrating an exemplary process of acquiring the berthing place edge point cloud.

The berthing parameter calculation unit 16 detects the markers provided in the berthing place (step S31), and then acquires the marker information (the marker height, the distance from the edge of the quay, the distance between markers, etc.) included in the map data or calculated in the past from the memory 12 (step S32).

The berthing parameter calculation unit 16 identifies the number of markers detected in step S31 and the positions of the markers detected in step S31, based on the map data or the marker information acquired in step S32 (step S33).

Based on the identification result of step S33, the berthing parameter calculation unit 16 determines whether the number of the markers detected in step S31 is one or two (step S34).

When the number of markers detected in step S31 is one, the berthing parameter calculation unit 16 performs the process of step S36 described below. When the number of markers detected in step S31 is two, the berthing parameter calculation unit 16 sets the search range of the edge of the berthing place using the extraction window, and then performs the process of step S41 to be described later (step S35).

Based on the identification result of step S33, the berthing parameter calculation unit 16 determines whether or not the marker installed in the berthing place is a single marker (step S36).

When the marker installed in the berthing place is not a single marker (step S36: No), the berthing parameter calculation unit 16 performs the process of step S38 described later. When the marker installed in the berthing place is a single marker (step S36: Yes), the berthing parameter calculation unit 16 sets the search range using the front distance $d_{mf}$ and the rear distance $d_{mr}$ included in the map data acquired in step S32 (step S37), and then performs the process of step S41 described below. Incidentally, for example, when the map data acquired in step S32 does not include the front distance $d_{mf}$ and the rear distance $d_{mr}$, and when the map data is not acquired in step S32, the berthing parameter calculation unit 16 performs the process of step S38 described later.

Based on the identification result of step S33, the berthing parameter calculation unit 16 determines whether or not the marker detected in step S31 can be identified as the front marker or the rear marker (step S38).

When the marker detected in step S31 can be identified as the front marker or the rear marker (step S38: Yes), the berthing parameter calculation unit 16 sets the search range using the marker interval $r_m$ and the x-coordinate of the marker position (step S39), and then performs the process of step S41 described later. When the marker detected in step S31 cannot be identified as the front marker or the rear marker (step S38: No), the berthing parameter calculation unit 16 sets two types of search ranges corresponding to each of the case where the marker is the front marker and the case where the marker is the rear marker (step S40), and then performs the process of step S41 described below.

The berthing parameter calculation unit 16 performs the process of acquiring the berthing place edge point cloud using the search area set by the process up to step S40 (step S41). Then, the berthing parameter calculation unit 16 updates the marker information (the marker height, the distance from the edge of the quay, the distance between the markers, etc.) stored in the memory 12 by using the result of the processes up to step S41 (step S42), and then continues the processes after step S16.

The berthing parameter calculation unit 16 generates the berthing side straight line L using the berthing place edge point cloud including the nearest neighbor point for each of the vertical lines obtained in step S15 (step S16). At this time, if one unknown marker which is not identified as the front marker or the rear marker has been detected, a berthing place edge point cloud for the front marker and a berthing place edge point cloud for the rear marker may exist. Therefore, a straight line is generated for both cases, the variance of the berthing place edge point cloud for both straight lines is calculated, and the straight line having smaller variance value is determined as the berthing side surface straight line L.

Next, the berthing parameter calculation unit 16 calculates the quay distance, the approach angle, and the berthing speed, which are the berthing parameters, using the berthing side straight line L calculated in step S16 (step S17).

Then, the berthing parameter calculation unit 16 generates reliability information on the basis of the identification result of the surface within field of view and the detection surface in step S13 and the calculation result of the berthing parameters in step S17 (step S18). Thereafter, the information processing device 1 performs control of the ship based on the reliability information (step S19). Thus, the information processing device 1 can accurately perform the control of the ship relating to the berthing on the basis of the reliability accurately reflecting the berthing situation.

Then, the information processing device 1 determines whether or not the target ship is berthed (step S20). In this case, for example, the information processing device 1 determines whether or not the target ship is berthed, based on the output signal of the sensor group 2 or a user input via the interface 11. Then, the information processing device 1 terminates the processing of the flowchart when it is determined that the target ship is berthed (step S20: Yes). On the other hand, when the target ship is not berthed (step S21: No), the information processing device 1 returns to the process of step S11.

According to the processing described above, the acquisition means acquires measurement data generated by the measurement device provided on the ship. Further, according to the processing described above, the marker position acquisition means acquires the position of at least one marker of the two markers provided in the berthing place based on the measurement data. Further, according to the above-described processing, the search range setting means sets the search range of the edge of the berthing place based on the position of at least one marker.

In the description of the first to third generation methods and the flowchart described above, the berthing place edge point cloud is extracted after generating the neighborhood point set that collects the nearest neighbor point for each of the vertical lines. However, by changing the order, the berthing place edge point clouds may be extracted from the point cloud data of the lidar, and then the nearest neighbor search for each vertical line may be performed to the extracted point cloud data to extract the berthing place edge point cloud. Similar results can be obtained in that order.

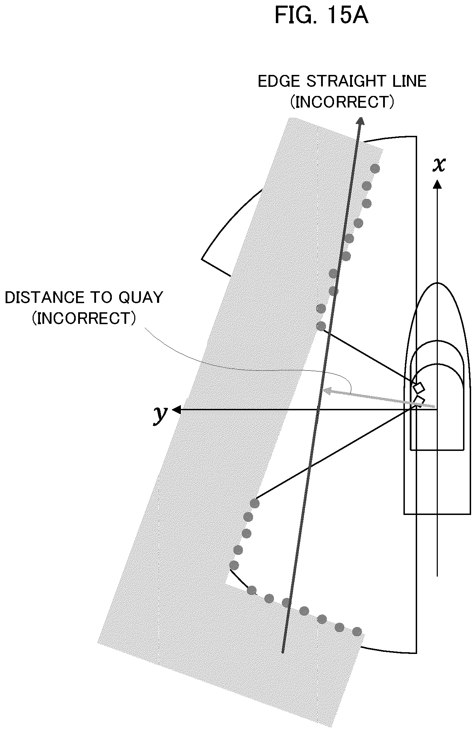

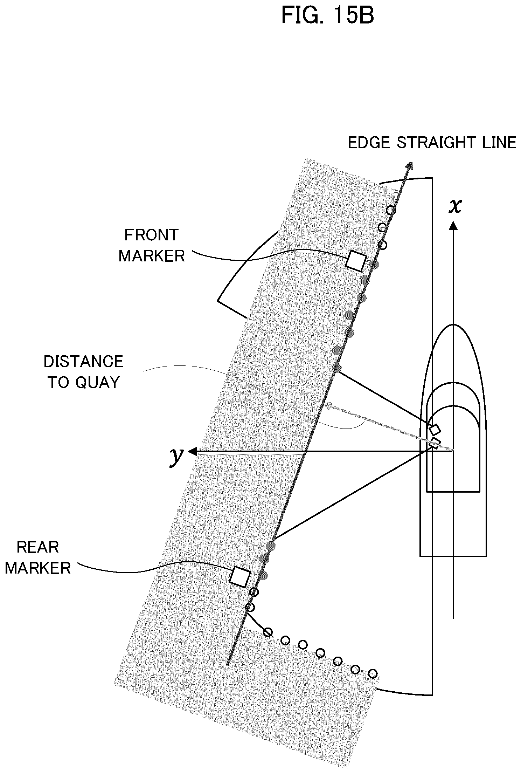

For example, when the lidar captures a quay surface that is not a target, the berthing place edge point cloud does not form a single straight line. Therefore, it is not possible to generate an edge straight line of the correct target quay even if a straight line is obtained by principal component analysis or least squares (see FIG. 15A). Further, when the incorrect edge straight line is generated, there is a possibility that the incorrect distance is calculated. If the incorrect edge straight line is regarded as the berthing side straight line L, the correct quay distance cannot be obtained by obtaining the perpendicular line to the the incorrect edge straight line to calculate the distance. In contrast, according to the present embodiment, even if there is another quay surface in the vicinity of the target quay to be berthed, it is possible to generate a correct straight line (see FIG. 15B) because only the point cloud located between the markers is used. Therefore, by calculating the distance of the perpendicular line to the correctly generated berthing side straight line L, the correct quay distance can be calculated. Further, according to the present embodiment, for example, even if the lidar captures an anchored ship and the side surface of the ship is misrecognized as the quay surface, the point cloud is excluded by the use of the markers, and hence a correct straight line can be generated (see

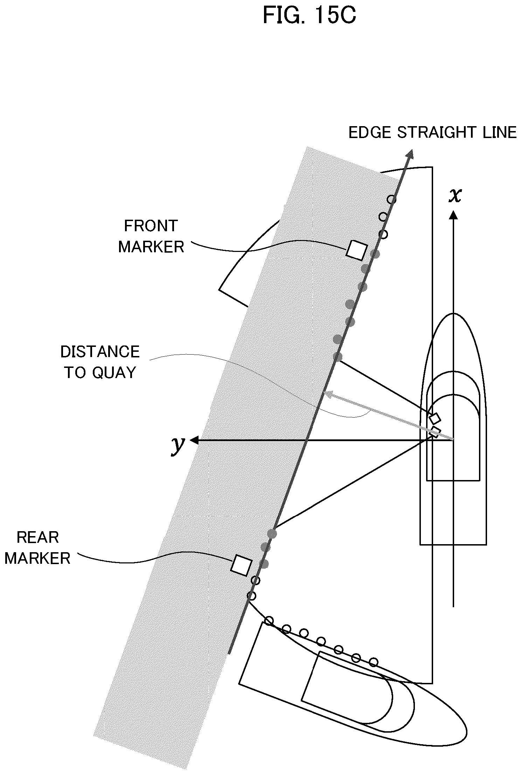

FIG. 15C). Therefore, even in such a case, by calculating the distance of the perpendicular line to the correctly generated berthing side straight line L, it is possible to calculate the correct quay distance. FIG. 15A is a diagram showing an example in which an incorrect edge straight line is generated. FIGS. 15B and 15C are diagrams showing an example in which a correct edge straight line is generated. Therefore, according to the present embodiment, the parameters used in the berthing support, such as the distance, the speed, and the angle, can be calculated with high accuracy on the basis of the berthing side straight line generated as described above.

Incidentally, when three or more markers are installed in the berthing area, the markers at both ends of the front and rear sides of the berthing area may be used.

In the above example, in order to identify whether the marker is in the front marker or the rear marker, the marker height from the top surface of the quay is made different. However, those markers may be discriminated in other ways. For example, the size, shape or orientation of the front and rear markers may be different. By determining the size, shape or orientation of the marker from the point cloud data of the marker detected by the lidar 3, it is possible to identify whether the marker is the front marker or the rear marker. In that case, the size, shape or orientation of the markers may be stored in the map DB.

<Second embodiment>

Next, a second embodiment will be described below. Incidentally, in the present embodiment, while appropriately omitting the description of the same configuration as the first embodiment, the description will be given with focusing on a part different from the first embodiment. Specifically, in the present embodiment, the system configuration, the hardware configuration, and the functional configuration are substantially the same as in the first embodiment, but the contents of the processing performed in the berthing parameter calculation unit 16 are different from those in the first embodiment. Therefore, in the following, the processing performed by the berthing parameter calculation unit 16 is mainly described.

[Processing for detecting the berthing area]

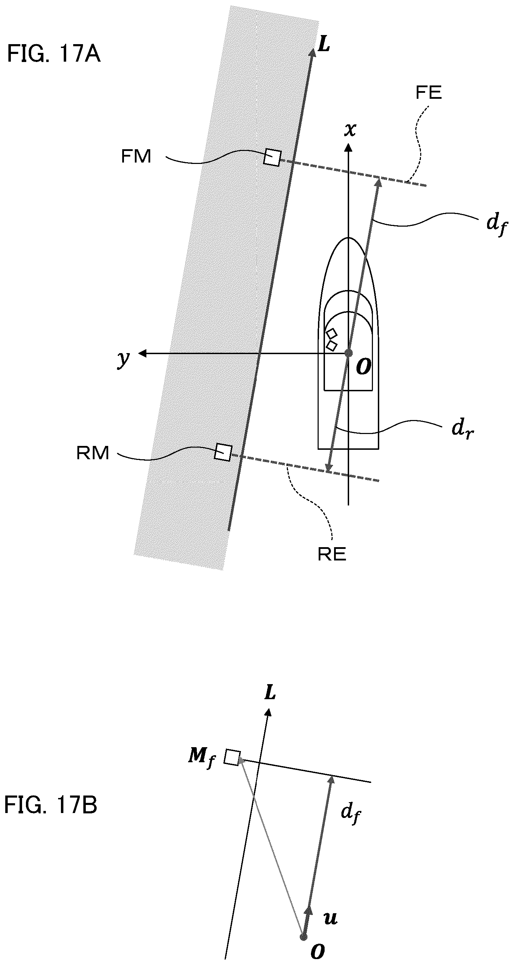

By performing the same processing as described above in the first embodiment, the berthing parameter calculation unit 16 acquires the coordinate position $M_f[m_{fx}\,m_{fy}\,m_{fz}]^T$ of the front marker FM in the ship coordinate system and the coordinate position $Mr[m_{rx}\,m_{ry}\,m_{rz}]^T$ of the rear marker RM in the ship coordinate system, respectively. Further, the berthing parameter calculation unit 16 generates the berthing side straight line L by performing the same processing as in the first embodiment. The berthing parameter calculation unit 16 identifies a rectangular area between the front end FE and the rear end RE (see FIG. 17A) as a berthing area based on the coordinate positions $M_f$ and $M_r$. The berthing parameter calculation unit 16 calculates the distance $d_f$ from the origin O of the ship coordinate system to the front end of the berthing area and the distance $d_r$ from the origin O to the rear end of the berthing area based on the coordinate positions $M_f$ and $M_r$ and the berthing side straight line L. The origin O corresponds to the reference point of the target ship, and may be set to the center position or the center of gravity position of the target ship, for example. In addition, the berthing area is the area where the target ship should be located when the target ship is berthed to the berthing place. FIG. 17A is a top view showing the origin O, the distance $d_f$ and distance $d_r$, the front end FE and the rear end RE.

Here, a specific example of the processing for for calculating the distance $d_f$ and the distance $d_r$ will be described with reference to FIGS. 17A and 17B. FIG. 17B is a diagram showing the unit vector "u" used to calculate the distance $d_f$ and distance $d_r$.

The berthing parameter calculation unit 16 generates the berthing side straight line L given by the following Formula (9) by performing the processing described above in the first embodiment.
[Formula 9]

$$L:\begin{bmatrix}L_x\\L_y\\L_z\end{bmatrix}=\begin{bmatrix}x_0\\y_0\\z_0\end{bmatrix}+t\begin{bmatrix}a\\b\\c\end{bmatrix}\qquad(9)$$

Here, "$[x_0\,y_0\,z_0]^T$" indicates the center of gravity of the measured points indicated by the berthing place edge point cloud, "$[a\,b\,c]^T$" indicates the direction vector, and "t" indicates the mediator. For example, when the principal component analysis is performed, the eigenvector corresponding to the largest eigenvalue is the direction vector of the berthing side straight line L.

Then, the berthing parameter calculation unit 16 calculates the unit vector u to be perpendicular with respect to the berthing side straight line L in two-dimensional plane, by the following Formula (10). The unit vector u is expressed as a vector starting from the origin O, as shown in FIG. 17B. [Formula 10]

$$u=\frac{1}{\sqrt{a^2+b^2}}\begin{bmatrix}a\\b\end{bmatrix}=\begin{bmatrix}u_x\\u_y\end{bmatrix}\qquad(10)$$

The dot product of the (x,y) component of the coordinate position $M_f$ and the unit vector u corresponds to the projection of the coordinate position $M_f$ to the vector u. Therefore, the following Formula (11) regarding the distance "$d_f$" shown in FIG. 17B holds. [Formula 11]

$$M_f\cdot u=\left|M_f\right|\left|u\right|\cos\theta=\left|M_f\right|\cos\theta=d_f\qquad(11)$$

Therefore, the berthing parameter calculation unit 16 calculates the distance $d_f$ based on the following Formula (12). [Formula 12]

$$d_f = m_{fx}u_x + m_{fy}u_y \qquad (12)$$

Further, by using the same method as described above, the berthing parameter calculation unit 16 calculates the distance $d_r$ by the following Formula (13). By Formulas (12) and (13), when the origin O is positioned between FE and RE as shown in FIG. 17A, both the distance $d_f$ and the distance $d_r$ are positive values. When the origin O is positioned in front of FE, the distance $d_f$ is a negative value and the distance $d_r$ is a positive value. When the origin O is positioned behind RE, the distance $d_f$ is a positive value and the distance $d_r$ is a negative value.

[Formula 13]

$$d_r = -\left(m_{rx}u_x + m_{ry}u_y\right) \qquad (13)$$

[Processing flow]

The processing flow in the present embodiment is substantially the same as the processing flow described above in the first embodiment (shown in FIG. 14A). On the other hand, in the present embodiment, for example, the process of calculating the distance $d_f$ and the distance $d_r$ using the berthing side straight line L generated in step S16 may be performed in step S17. The distance $d_f$ and the distance $d_r$ may be used for the calculation of the berthing parameters in step S17.

As described above, according to the present embodiment, as the parameter used in the berthing support, the distances from the current position of the target ship to the ends of the berthing area can be calculated with high accuracy.

Incidentally, when three or more markers are installed in the berthing area, the markers at both front and rear ends of the berthing area may be used.

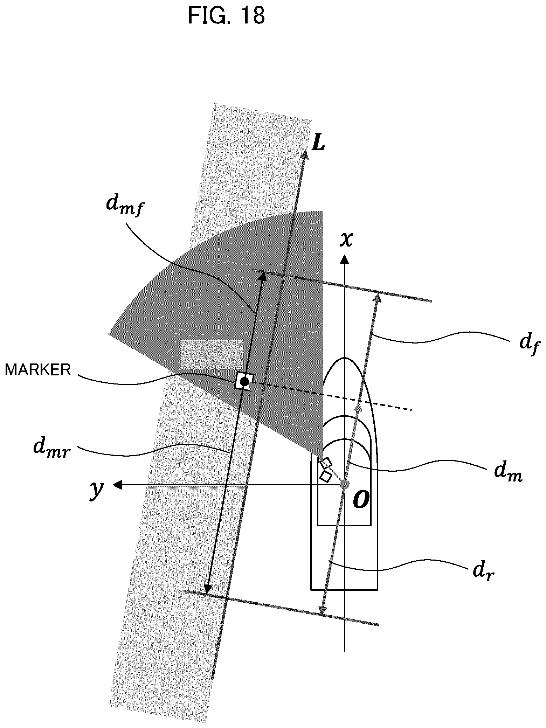

Also, even when only one marker is set in the berthing area, the distance $d_f$ and the distance $d_r$ can be calculated if the front distance $d_{mf}$ and the rear distance $d_{mr}$ from the marker are stored in the map data of the memory 112. As illustrated in FIG. 18, when the ship is going to berth, the berthing parameter calculation unit 16 refers to the marker information in the map data and acquires the front distance $d_{mf}$ and the rear distance $d_{mr}$ from the marker. The berthing parameter calculation unit 16 calculate the distance $d_m$ of the marker along the berthing side straight line L, and calculates the distance $d_f$ and the distance $d_r$ from the acquired distance $d_{mf}$ and $d_{mr}$ by the following Formulas (14) and (15). FIG. 18 is a diagram illustrating an example of a process of calculating the distance $d_f$ and the distance $d_r$.

[Formula 14]

$$d_f = d_m + d_{mf} \qquad (14)$$

[Formula 15]

$$d_r = d_m + d_{mr} \qquad (15)$$

In the present embodiment described above, the program may be stored using various types of non-temporary computer readable media (non-transitory computer readable medium) and supplied to a controller that is a computer, etc. Non-transitory computer readable media include various types of entity storage media (tangible storage medium). Examples of non-transitory computer-readable media include magnetic storage media (e.g., flexible disks, magnetic tapes, hard disk drives), magneto-optical storage media (e.g., magneto-optical disks), CD-ROM(Read Only Memory), CD-R, CD-R/W, solid-state memories (e.g., mask ROM, PROM(Programmable ROM), EPROM(Erasable PROM) and flash ROM, RAM(Random Access Memory).

While the present invention has been described with reference to the embodiments, the present invention is not limited to the above embodiments. Various modifications that can be understood by a person skilled in the art within the scope of the present invention can be made to the configuration and details of the present invention. That is, the Present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

DESCRIPTION OF REFERENCE NUMBERS

**[0139]**

1 Information processing device
2 Sensor group
3 Lidar

**Claims**

1. An information processing device comprising:

   an acquisition means configured to acquire measurement data generated by a measuring device provided on a ship;
   a marker position acquisition means configured to acquire a position of at least one marker among markers provided to a berthing place, based on the measurement data; and
   a search range setting means configured to set a search range of a point cloud of an edge portion of the berthing place, based on the position of the at least one marker.

2. The information processing device according to claim 1,

   wherein the marker position acquisition means acquires a position of a first marker provided on a front side of the ship, and a position of a second marker provided on a rear side of the ship, and
   wherein the search range setting means sets a substantially rectangular area or a substantially rectangular parallelepiped area corresponding to the position of the first marker and the position of the second marker as the search range.

3. The information processing device according to claim 2, wherein the search range setting means sets the search range by using a distance from a straight line along the edge portion of the berthing place to the first marker and a distance from the straight line to the second marker.

4. The information processing apparatus according to claim 1,

   wherein the marker position acquisition means acquires a position of one marker provided on a front side or a rear side of the ship, and
   wherein the search range setting means sets the search range based on an interval of two markers provided to the berthing place and the position of the one marker.

5. The information processing device according to claim 4, wherein the search range setting means sets the search range by using a distance from a straight line along the edge portion of the berthing place to the one marker.

6. The information processing device according to claim 4, wherein the search range setting means sets the search range by using a total length of the ship.

7. The information processing device according to claim 1,

   wherein the marker position acquisition means acquires a position of a first marker provided on a front side of the ship and a position of a second marker provided on a rear side of the ship, and
   wherein the information processing device further comprises a distance calculation means configured to calculate a distance from a reference position of the ship to ends of a berthing area where the ship should be positioned when the ship is going to berth at the berthing place, based on the position of the first marker, the position of the second marker, and a straight line along the edge portion of the berthing place.

8. The information processing device according to any one of claims 1 to 7, wherein two markers are provided to the berthing place at positions of difference heights from an upper surface of the berthing place.

9. A control method executed by a computer, comprising:

   acquiring measurement data generated by a measuring device provided on a ship;
   acquiring a position of at least one marker among markers provided to a berthing place, based on the measurement data; and

setting a search range of a point cloud of an edge portion of the berthing place, based on the position of the at least one marker.

10. A program causing a computer to execute processing of:

acquiring measurement data generated by a measuring device provided on a ship;
acquiring a position of at least one marker among markers provided to a berthing place, based on the measurement data; and
setting a search range of a point cloud of an edge portion of the berthing place, based on the position of the at least one marker.

11. A storage medium storing the program according to claim 10.

FIG. 1A

1

2

SENSOR GROUP

INFORMATION PROCESSING DEVICE

LIDAR 3

90          90

FIG. 1B

3          3

90          90

90

3

FIG. 1C

FIG. 2

FIG. 3

15

BERTHING PLACE DETECTION UNIT

POINT CLOUD DATA

NORMAL VECTOR CALCULATION
20

FIELD OF VIEW & DETECTION SURFACE IDENTIFICATION
21

NORMAL VECTOR NUMBER IDENTIFICATION
22

MEAN & VARIANCE CALCULATION
23

BERTHING STATE DETERMINATION
24

16

BERTHING PARAMETER CALCULATION UNIT

MARKER DETECTION
41

NEIGHBOR POINT SEARCH
26

BERTHING PLACE EDGE POINT CLOUD EXTRACTION
42

STRAIGHT LINE GENERATION
27

APPROACH ANGLE CALCULATION
29

QUAY DISTANCE CALCULATION
28

BERTHING SPEED CALCULATION
30

RELIABILITY INFORMATION GENERATION
40

## FIG. 4A

## FIG. 4B

FIG. 5A

| UPPER SURFACE | | | | SIDE SURFACE | | | | STRAIGHT LINE | DISTANCE | | ANGLE |
|---|---|---|---|---|---|---|---|---|---|---|---|
| VIEWING ANGLE | DETECTION | NUMBER OF NORMALS | VARIANCE | VIEWING ANGLE | DETECTION | NUMBER OF NORMALS | VARIANCE | ABSOLUTE VALUE | AMOUNT OF CHANGE | CHANGE RATE | AMOUNT OF CHANGE |
| 0 or 1 | 0 or 1 | 0 or 1 | 0 or 1 | 0 or 1 | 0 or 1 | 0 or 1 | 0 or 1 | 0 or 1 | 0 or 1 | 0 or 1 | 0 or 1 |

## FIG. 5B

| NUMBER OF TARGET POINTS | $c_3 = \dfrac{1}{76-10}x - \dfrac{10}{76-10}$ | |
| --- | --- | --- |
| STANDARD DEVIATION OF TARGET POINTS | $c_2 = \dfrac{1}{0.1-0.2}x - \dfrac{0.2}{0.1-0.2}$ | |
| POINT CLOUD BOTH SIDES /ONE SIDE | $c_1 = \begin{cases} 0.0 & (x=0) \\ 1.0 & (x=1) \end{cases}$ | |
| INTERVAL BETWEEN TWO ENDS OF TARGET POINTS | $c_0 = \dfrac{1}{20.0-4.0}x - \dfrac{4.0}{20.0-4.0}$ | |
| CALCULATION RELIABILITY | $c = \dfrac{w_3 c_3 + w_2 c_2 + w_1 c_1 + w_0 c_0}{w_3 + w_2 + w_1 + w_0}$ $(w_3 = 8.0, w_2 = 4.0, w_1 = 2.0, w_0 = 1.0)$ | |
| TOTAL RELIABILITY | $r = \dfrac{w_{qs}(q_{s0} + q_{s1}) + w_{qu}(q_{u0} + q_{u1}) + w_m(m_0 + m_1) + w_c c}{2w_{qs} + 2w_{qu} + 2w_m + w_c}$ $\left(w_{qs} = 2.0, w_{qu} = 1.0, w_{m0} = 1.0, w_{m1} = 1.0, w_c = 1.0\right)$ | |

# FIG. 5C

L

STANDARD
DEVIATION $c_2$

M0

INTERVAL OF
BOTH ENDS $c_0$

BOTH SIDES
/ ONE SIDE $c_1$

M1

NUMBER $c_3$

FIG. 6A

FIG. 6B

## FIG. 7

# FIG. 8

## FIG. 9A

SBP

●⋯NEAREST NEIGHBOR
POINTS INCLUDED IN
NEIGHBOR POINT SET

# FIG. 9B

SBP

$x$

$y$

●···NEAREST NEIGHBOR
POINTS  INCLUDED IN
BERTHING PLACE EDGE POINT
CLOUD

FIG. 10A

REAR MARKER

$h_{mr}$

FRONT MARKER

$h_{mf}$

## FIG. 10B

$r_m$

SBP

## FIG. 10C

FIG. 11

CM(=FM)

$x$

$m_{fx} + \Delta w$

$y$

$r_m$

●···NEAREST
NEIGHBOR POINTS

FIG. 12

CM

SBP

LD

VARIANCE

●⋯NEAREST
NEIGHBOR POINTS

FIG. 13

●···NEAREST
NEIGHBOR POINTS

LE

CM

SBP

VARIANCE

# FIG. 14A

```
                    ┌─────────────────┐
                    │     START       │
                    └────────┬────────┘
                             │ ◄──────────────────────────┐
       S11                   ▼                            │
       ┌──────────────────────────────────────────┐      │
       │        ACQUIRE POINT CLOUD DATA           │      │
       │      IN DIRECTION OF BERTHING PLACE        │      │
       └──────────────────────────────────────────┘      │
       S12                   ▼                            │
       ┌──────────────────────────────────────────┐      │
       │        CALCULATE NORMAL VECTORS,          │      │
       │      CALCULATE NUMBER & VARIANCE           │      │
       │          OF NORMAL VECTORS                 │      │
       └──────────────────────────────────────────┘      │
       S13                   ▼                            │
       ┌──────────────────────────────────────────┐      │
       │    IDENTIFY SURFACE WITHIN FIELD OF VIEW   │      │
       │          & DETECTION SURFACE               │      │
       └──────────────────────────────────────────┘      │
       S14                   ▼                            │
       ┌──────────────────────────────────────────┐      │
       │         DETERMINE NEAREST POINT           │      │
       │          FOR EACH VERTICAL LINE            │      │
       └──────────────────────────────────────────┘      │
       S15                   ▼                            │
       ┌┤  ACQUIRE BERTHING PLACE EDGE POINT CLOUD ├┐     │
       └──────────────────────────────────────────┘      │
       S16                   ▼                            │
       ┌──────────────────────────────────────────┐      │
       │     GENERATE BERTHING SIDE STRAIGHT LINE   │      │
       └──────────────────────────────────────────┘      │
       S17                   ▼                            │
       ┌──────────────────────────────────────────┐      │
       │      CALCULATE BERTHING PARAMETERS         │      │
       │    (QUAY DISTANCE, APPROACH ANGLE,         │      │
       │        BERTHING SPEED, ETC.)               │      │
       └──────────────────────────────────────────┘      │
       S18                   ▼                            │
       ┌──────────────────────────────────────────┐      │
       │     GENERATE RELIABILITY INFORMATION       │      │
       └──────────────────────────────────────────┘      │
       S19                   ▼                            │
       ┌──────────────────────────────────────────┐      │
       │ CONTROL SHIP BASED ON RELIABILITY INFORMATION │   │
       └──────────────────────────────────────────┘      │
       S20                   ▼                            │
            ┌─────────────────────────────┐  No          │
            ◄       BERTHED ?              ├──────────────┘
            └──────────────┬──────────────┘
                           │ Yes
                           ▼
                    ┌─────────────────┐
                    │      END        │
                    └─────────────────┘
```

## FIG. 14B

START

↓ S31

DETECT MARKERS

↓ S32

ACQUIRE MARKER INFORMATION
IN MAP DATA OR
CALCULATED IN PAST

↓ S33

IDENTIFY NUMBER AND
POSITION OF MARKERS

↓ S34

NUMBER OF MARKERS? — TWO → **S35** SET SEARCH RANGE USING EXTRACTION WINDOW

ONE ↓ S36

SINGLE MARKER INSTALLED? — Yes → **S37** SET SEARCH RANGE USING FRONT DISTANCE $d_{mf}$ & REAR DISTANCE $d_{mr}$

No ↓ S38

FRONT/REAR IDENTIFIED? — Yes → **S39** SET SEARCH RANGE USING MARKER INTERVAL $r_m$ & X-COORDINATE OF MARKER POSITION

No ↓ S40

SET TWO SEARCH RANGES FOR
FRONT MARKER AND REAR MARKER

↓ S41

ACQUIRE BERTHING PLACE
EDGE POINT CLOUD

↓ S42

UPDATE MARKER INFORMATION

↓

END

## FIG. 15A

EDGE STRAIGHT LINE
(INCORRECT)

DISTANCE TO QUAY
(INCORRECT)

$x$

$y$

# FIG. 15B

EDGE STRAIGHT LINE

$x$

FRONT
MARKER

DISTANCE
TO QUAY

$y$

REAR
MARKER

# FIG. 15C

# FIG. 16

FIG. 17A

FIG. 17B

FIG. 18

<div align="center">

**INTERNATIONAL SEARCH REPORT**

</div>

| International application No. |
|---|
| **PCT/JP2022/011588** |

**A.    CLASSIFICATION OF SUBJECT MATTER**

***B63B 79/10***(2020.01)i

FI:    B63B79/10

According to International Patent Classification (IPC) or to both national classification and IPC

**B.    FIELDS SEARCHED**

Minimum documentation searched (classification system followed by classification symbols)

B63B79/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2005-180949 A (TAMA TLO KK) 07 July 2005 (2005-07-07)<br>    paragraphs [0011]-[0067], fig. 1-14 | 1-11 |
| A | JP 2012-528417 A (GLAESER, Philipp) 12 November 2012 (2012-11-12) | 1-11 |
| A | KR 10-1620369 B1 (MARTEK CO., LTD.) 13 May 2016 (2016-05-13) | 1-11 |
| A | KR 10-2011-0113029 A (MOKPO NATIONAL UNIVERSITY INDUSTRY-ACADEMIA<br>COOPERATION GROUP) 14 October 2011 (2011-10-14) | 1-11 |

☐ Further documents are listed in the continuation of Box C.          ☑ See patent family annex.

| | |
|---|---|
| *      Special categories of cited documents:<br>"A"   document defining the general state of the art which is not considered<br>       to be of particular relevance<br>"E"   earlier application or patent but published on or after the international<br>       filing date<br>"L"   document which may throw doubts on priority claim(s) or which is<br>       cited to establish the publication date of another citation or other<br>       special reason (as specified)<br>"O"   document referring to an oral disclosure, use, exhibition or other<br>       means<br>"P"   document published prior to the international filing date but later than<br>       the priority date claimed | "T"   later document published after the international filing date or priority<br>       date and not in conflict with the application but cited to understand the<br>       principle or theory underlying the invention<br>"X"   document of particular relevance; the claimed invention cannot be<br>       considered novel or cannot be considered to involve an inventive step<br>       when the document is taken alone<br>"Y"   document of particular relevance; the claimed invention cannot be<br>       considered to involve an inventive step when the document is<br>       combined with one or more other such documents, such combination<br>       being obvious to a person skilled in the art<br>"&"   document member of the same patent family |

| Date of the actual completion of the international search | Date of mailing of the international search report |
|---|---|
| **14 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2022/011588** |

| Patent document cited in search report | Publication date (day/month/year) | Patent family member(s) | Publication date (day/month/year) |
|---|---|---|---|
| JP 2005-180949 A | 07 July 2005 | (Family: none) | |
| JP 2012-528417 A | 12 November 2012 | US 2012/0072059 A1 | |
| KR 10-1620369 B1 | 13 May 2016 | (Family: none) | |
| KR 10-2011-0113029 A | 14 October 2011 | (Family: none) | |

Form PCT/ISA/210 (patent family annex) (January 2015)

**EP 4 494 996 A1**

**REFERENCES CITED IN THE DESCRIPTION**

**Patent documents cited in the description**

- JP 2020059403 A

- WO 2019188745 A